# EUROPEAN PATENT APPLICATION

(11) **EP 4 764 816 A1**
(43) Date of publication of application: **24.06.2026**
(21) Application number: 24909951.6
(22) Date of filing: 03.09.2024
(51) Int. Cl.: G06F 3/147, G06F 3/14

(54) **WALLPAPER DISPLAY METHOD, READABLE STORAGE MEDIUM, PROGRAM PRODUCT, AND ELECTRONIC DEVICE**

(30) Priority: 29.12.2023 CN 202311871273
(71) Applicant: HUAWEI TECHNOLOGIES CO., LTD., Shenzhen 518129 (CN)
(72) Inventor: BIAN, Sucheng, Shenzhen, Guangdong 518129 (CN); FU, Jiahui, Shenzhen, Guangdong 518129 (CN); DING, Ning, Shenzhen, Guangdong 518129 (CN); ZHENG, Hongchao, Shenzhen, Guangdong 518129 (CN); ZHOU, Li, Shenzhen, Guangdong 518129 (CN)
(74) Representative: Gill Jennings & Every LLP
(86) International application number: PCT/CN2024/116561
(87) International publication number: WO 2025/139005

(57) **Abstract**

This application relates to the field of terminal technologies, and discloses a wallpaper display method, a readable storage medium, a program product, and an electronic device. In the method, after an operation of configuring a folded-state wallpaper and an unfolded-state wallpaper based on a user operation, the electronic device may determine at least one first display element in the folded-state wallpaper or the unfolded-state wallpaper, and generate switching animation in which the folded-state wallpaper switches to the unfolded-state wallpaper. The switching animation includes first animation effect in which each first display element gradually switches from a first display state to a second display state. In a process in which the electronic device is changed from the folded state, the switching animation may be played based on a folding angle of a flexible screen of the electronic device. In this way, a sudden picture change can be avoided in a process in which a folding status of the flexible screen of the electronic device is changed, thereby improving user experience.

## Description

This application claims priority to Chinese Patent Application No. 202311871273.9, filed with the China National Intellectual Property Administration on December 29, 2023 and entitled "WALLPAPER DISPLAY METHOD, READABLE STORAGE MEDIUM, PROGRAM PRODUCT, AND ELECTRONIC DEVICE", which is incorporated herein by reference in its entirety.

### TECHNICAL FIELD

This application relates to the field of terminal technologies, and in particular, to a wallpaper display method, a readable storage medium, a program product, and an electronic device.

### BACKGROUND

With development of flexible screen technologies, foldable electronic devices configured with flexible screens are increasingly widely used. When the foldable electronic device is in an unfolded state (for example, the flexible screen of the foldable electronic device is in the unfolded state), the foldable electronic device displays a picture in an entire region of the flexible screen. When the foldable electronic device is in a folded state (for example, the flexible screen of the foldable electronic device is in the folded state), the foldable electronic device displays a picture in a partial region of the flexible screen. In other words, sizes of screen regions used to display pictures are different in the unfolded state and the folded state of the foldable electronic device.

In some cases, a wallpaper of the foldable electronic device in the unfolded state and a wallpaper of the foldable electronic device in the folded state are respectively content in different regions of a same image, or are respectively content of different images. In this case, in a process in which the foldable electronic device is switched from the unfolded state to the folded state, or switched from the folded state to the unfolded state, a sudden change occurs in the wallpaper displayed on the foldable electronic device, affecting user experience.

### SUMMARY

In view of this, this application provides a wallpaper display method, a readable storage medium, a program product, and an electronic device.

According to a first aspect, this application provides a wallpaper display method, applied to a foldable electronic device. The method includes: In a folded state, the foldable electronic device displays a first wallpaper; displays first animation in a process in which the foldable electronic device is unfolded from the folded state to an unfolded state, where the first animation includes first animation effect corresponding to a first display element, the first animation effect is generated based on the first display element in the first wallpaper and/or a second wallpaper during configuration of the first wallpaper and the second wallpaper, and a display progress of the first animation is associated with a folding angle during unfolding of the foldable electronic device; and displays the second wallpaper when the foldable electronic device is unfolded to the unfolded state.

In the method, the first animation displayed by the foldable electronic device in the process from the folded state to the unfolded state includes the first animation effect generated based on the first display element in a folded-state wallpaper and/or an unfolded-state wallpaper in the process in which a user sets the folded-state wallpaper (the first wallpaper) displayed in the folded state and the unfolded-state wallpaper (the second wallpaper) displayed in the unfolded state. In this way, a sudden picture change may occur in a process of switching between the folded-state wallpaper and the unfolded-state wallpaper. In addition, the first animation effect is generated based on the first display element in the folded-state wallpaper and/or the unfolded-state wallpaper configured by the user, and is not preset in the electronic device. This helps improve diversity of the first animation effect/the first animation, and helps improve user experience.

In a possible implementation of the first aspect, the first wallpaper and the second wallpaper are obtained based on a first image.

In this implementation, the first wallpaper and the second wallpaper are obtained based on a same image (the first image).

In a possible implementation of the first aspect, the first wallpaper is obtained based on a first image region of the first image, and the second wallpaper is obtained based on a second image region of the first image.

In a possible implementation of the first aspect, the first wallpaper is obtained based on a first image region of a second image, the second wallpaper is obtained based on a second image region of the second image, and the second image is obtained by performing image expansion on the first image.

In this implementation, if a size of the first image used when the user sets the wallpaper is excessively small, the foldable electronic device may further expand the first image to the second image with a larger size and more content, set the first wallpaper based on at least a partial image region (the first image region) in the first image, and set the second wallpaper based on at least a partial image region (the second image region) in the second image. In this way, even if the size of the first image selected by the user is small, the unfolded-state wallpaper may have larger picture space. This helps improve a selectable range when the user sets the wallpaper, and avoids occurrence, due to the small size of the first image, of stretching or a black border in the unfolded-state wallpaper or the folded-state wallpaper.

In a possible implementation of the first aspect, the first wallpaper is obtained based on a first image region of the first image, the second wallpaper is obtained based on a second image region of a second image, and the second image is obtained by performing image expansion on the first image.

In this implementation, if the size of the first image used when the user sets the wallpaper is excessively small, the foldable electronic device may further expand the first image to the second image with a larger size and more content, set the first wallpaper based on at least a partial image region (the first image region) in the second image, and set the second wallpaper based on at least a partial image region (the second image region) in the second image. In this way, even if the size of the first image selected by the user is small, the unfolded-state wallpaper may have larger picture space. This helps improve a selectable range when the user sets the wallpaper, and avoids occurrence, due to the small size of the first image, of stretching or a black border in the unfolded-state wallpaper or the folded-state wallpaper.

In a possible implementation of the first aspect, the second image is obtained by performing image expansion on the first image based on a subject in the first image.

In this manner, the foldable electronic device expands the first image based on the subject (a subject that is automatically identified or a subject selected by the user) in the first image, so that the second image obtained through image expansion can meet a user requirement.

In a possible implementation of the first aspect, a process of performing image expansion on the first image includes: performing image expansion on the first image based on a subject in the first image to obtain a plurality of expanded images; and using, as the second image, an expanded image selected by a user from the plurality of expanded images.

In this manner, the foldable electronic device may generate a plurality of image expansion results, so that the user can select, from the plurality of image expansion results, the second image required by the user, thereby improving user experience.

In a possible implementation of the first aspect, the first animation effect includes a plurality of frames of images in which the first display element switches from a first display state to a second display state.

In a possible implementation of the first aspect, the display status includes at least one of the following statuses: a form, a size, a position, a rotation angle, an occlusion relationship with another display element, and whether to display.

In a possible implementation of the first aspect, a process of generating the first animation effect includes: adjusting display statuses/a display status of the first display element in the first image region and/or the second image region, for the first display element to be in the first display state in the first wallpaper and to be in the second display state in the second wallpaper; and generating the first animation effect in which the first display element switches from the first display state to the second display state. The first wallpaper is a corresponding image obtained by adjusting the display status of the first display element in the first image region; and/or the second wallpaper is a corresponding image obtained by adjusting the display status of the first display element in the second image region.

In this implementation, in the process of generating the first animation effect or after generating the first animation effect, the foldable electronic device may modify the display status of the first display element in the first image region and/or the display status of the first display element in the second image region, so that the statuses of the first display element in the first wallpaper and the second wallpaper match the first animation effect. In this way, a sudden picture change may be avoided in the process of switching between the first wallpaper (or the second wallpaper) and the first animation effect.

In a possible implementation of the first aspect, the first display element is in the first display state in the first image region and is in the second display state in the second image region, and a process of generating the first animation effect includes: generating the first animation effect in which the first display element switches from the first display state to the second display state, where the first wallpaper is an image corresponding to the first image region, and the second wallpaper is an image corresponding to the second image region.

In a possible implementation of the first aspect, the first wallpaper and the second wallpaper have third image regions with same content.

In this implementation, the first wallpaper and the second wallpaper have third image regions with same content. That is, if the first wallpaper and the second wallpaper come from a same image (for example, the foregoing first image or second image), in the same image, the first image region corresponding to the first wallpaper and the second image region corresponding to the second wallpaper have an overlapping region, and content corresponding to the overlapping region is content of the third image region.

In a possible implementation of the first aspect, the first animation further includes second animation effect in which the first wallpaper moves. After the first wallpaper moves, a position of the third image region of the first wallpaper is the same as a position that is of the third image region and that is obtained when the foldable electronic device displays the second wallpaper.

In this implementation, if the position that is of the third image region on a display and that is obtained when the first wallpaper is displayed is different from the position that is of the third image region on the display and that is obtained when the second wallpaper is displayed, the foldable electronic device may further display the second animation effect. In this way, it can be avoided that the sudden picture change occurs because the position that is of the third image region on the display and that is obtained when the first wallpaper is displayed is different from the position that is of the third image region on the display and that is obtained when the second wallpaper is displayed.

In a possible implementation of the first aspect, the first animation further includes third animation effect in which image content in a region other than the third image region of the second wallpaper is displayed by extending outward from the third image region.

In this implementation, if the second animation effect is displayed, the foldable electronic device may further display the third animation effect after displaying the second animation effect, so that the content in the region other than the third image region of the second wallpaper is displayed by gradually extending outward from the third image region. In this way, the sudden picture change due to direct displaying of the second wallpaper may be avoided.

In a possible implementation of the first aspect, a process of determining the first display element includes: determining the first display element in the first image region and/or in the second image region based on a first model.

In a possible implementation of the first aspect, determining the first display element in the first image region and/or the second image region based on the first model includes: determining at least one display element in the first image region and/or the second image region based on the first model; and using, as the first display element, a display element selected by the user from the at least one display element.

In a possible implementation of the first aspect, the first animation effect is obtained based on a second model.

In a possible implementation of the first aspect, the foldable electronic device includes a flexible screen, and the flexible screen is folded or unfolded synchronously with folding or unfolding of the foldable electronic device. A folding angle of the foldable electronic device may be a folding angle of the flexible screen.

According to a second aspect, an embodiment of this application provides a wallpaper display method, applied to a foldable electronic device. The method includes: In a folded state, the foldable electronic device displays a first wallpaper; displays first animation in a process in which the foldable electronic device is unfolded from the folded state to an unfolded state, where the first animation includes second animation effect in which the first wallpaper moves, the first wallpaper and a second wallpaper have third image regions with same content, and after the first wallpaper moves, a position of the third image region of the first wallpaper is the same as a position that is of the third image region and that is obtained when the foldable electronic device displays the second wallpaper, and a display progress of the first animation is associated with a folding angle during unfolding of the foldable electronic device; and displays the second wallpaper when the foldable electronic device is unfolded to the unfolded state.

In the method, if the position that is of the third image region on the flexible screen and that is obtained when the first wallpaper is displayed is different from the position that is of the third image region on a display and that is obtained when the second wallpaper is displayed, the foldable electronic device may further display the second animation effect. In this way, it can be avoided that the sudden picture change occurs because the position that is of the third image region on the display and that is obtained when the first wallpaper is displayed is different from the position that is of the third image region on the display and that is obtained when the second wallpaper is displayed.

In a possible implementation of the second aspect, the first animation further includes third animation effect in which image content in a region other than the third image region of the second wallpaper is displayed by extending outward from the third image region.

In this implementation, if the second animation effect is displayed, the foldable electronic device may further display the third animation effect after displaying the second animation effect, so that the content in the region other than the third image region of the second wallpaper is displayed by gradually extending outward from the third image region. In this way, the sudden picture change due to direct displaying of the second wallpaper may be avoided.

In a possible implementation of the second aspect, the first animation further includes first animation effect corresponding to a first display element, and the first animation effect is generated based on the first display element in the first wallpaper and/or the second wallpaper during configuration of the first wallpaper and the second wallpaper.

In the method, the first animation displayed by the foldable electronic device in the process from the folded state to the unfolded state includes the first animation effect generated based on the first display element in a folded-state wallpaper and/or an unfolded-state wallpaper in the process in which a user sets the folded-state wallpaper (the first wallpaper) displayed in the folded state and the unfolded-state wallpaper (the second wallpaper) displayed in the unfolded state. In this way, a sudden picture change may occur in a process of switching between the folded-state wallpaper and the unfolded-state wallpaper. In addition, the first animation effect is generated based on the first display element in the folded-state wallpaper and/or the unfolded-state wallpaper configured by the user, and is not preset in the electronic device. This helps improve diversity of the first animation effect/the first animation, and helps improve user experience.

In a possible implementation of the second aspect, the first wallpaper and the second wallpaper are obtained based on a first image.

In this implementation, the first wallpaper and the second wallpaper are obtained based on a same image (the first image).

In a possible implementation of the second aspect, the first wallpaper is obtained based on a first image region of the first image, and the second wallpaper is obtained based on a second image region of the first image.

In a possible implementation of the second aspect, the first wallpaper is obtained based on a first image region of a second image, the second wallpaper is obtained based on a second image region of the second image, and the second image is obtained by performing image expansion on the first image.

In this implementation, if a size of the first image used when the user sets the wallpaper is excessively small, the foldable electronic device may further expand the first image to the second image with a larger size and more content, set the first wallpaper based on at least a partial image region (the first image region) in the first image, and set the second wallpaper based on at least a partial image region (the second image region) in the second image. In this way, even if the size of the first image selected by the user is small, the unfolded-state wallpaper may have larger picture space. This helps improve a selectable range when the user sets the wallpaper, and avoids occurrence, due to the small size of the first image, of stretching or a black border in the unfolded-state wallpaper or the folded-state wallpaper.

In a possible implementation of the second aspect, the first wallpaper is obtained based on a first image region of the first image, the second wallpaper is obtained based on a second image region of a second image, and the second image is obtained by performing image expansion on the first image.

In this implementation, if the size of the first image used when the user sets the wallpaper is excessively small, the foldable electronic device may further expand the first image to the second image with a larger size and more content, set the first wallpaper based on at least a partial image region (the first image region) in the second image, and set the second wallpaper based on at least a partial image region (the second image region) in the second image. In this way, even if the size of the first image selected by the user is small, the unfolded-state wallpaper may have larger picture space. This helps improve a selectable range when the user sets the wallpaper, and avoids occurrence, due to the small size of the first image, of stretching or a black border in the unfolded-state wallpaper or the folded-state wallpaper.

In a possible implementation of the second aspect, the second image is obtained by performing image expansion on the first image based on a subject in the first image.

In this manner, the foldable electronic device expands the first image based on the subject (a subject that is automatically identified or a subject selected by the user) in the first image, so that the second image obtained through image expansion can meet a user requirement.

In a possible implementation of the second aspect, a process of performing image expansion on the first image includes: performing image expansion on the first image based on a subject in the first image to obtain a plurality of expanded images; and using, as the second image, an expanded image selected by a user from the plurality of expanded images.

In this manner, the foldable electronic device may generate a plurality of image expansion results, so that the user can select, from the plurality of image expansion results, the second image required by the user, thereby improving user experience.

In a possible implementation of the second aspect, the first animation effect includes a plurality of frames of images in which the first display element switches from a first display state to a second display state.

In a possible implementation of the second aspect, the display status includes at least one of the following statuses: a form, a size, a position, a rotation angle, an occlusion relationship with another display element, and whether to display.

In a possible implementation of the second aspect, a process of generating the first animation effect includes: adjusting display statuses/a display status of the first display element in the first image region and/or the second image region, for the first display element to be in the first display state in the first wallpaper and to be in the second display state in the second wallpaper; and generating the first animation effect in which the first display element switches from the first display state to the second display state. The first wallpaper is a corresponding image obtained by adjusting the display status of the first display element in the first image region; and/or the second wallpaper is a corresponding image obtained by adjusting the display status of the first display element in the second image region.

In this implementation, in the process of generating the first animation effect or after generating the first animation effect, the foldable electronic device may modify the display status of the first display element in the first image region and/or the display status of the first display element in the second image region, so that the statuses of the first display element in the first wallpaper and the second wallpaper match the first animation effect. In this way, a sudden picture change may be avoided in the process of switching between the first wallpaper (or the second wallpaper) and the first animation effect.

In a possible implementation of the second aspect, the first display element is in the first display state in the first image region and is in the second display state in the second image region, and a process of generating the first animation effect includes: generating the first animation effect in which the first display element switches from the first display state to the second display state, where the first wallpaper is an image corresponding to the first image region, and the second wallpaper is an image corresponding to the second image region.

In a possible implementation of the second aspect, the first wallpaper and the second wallpaper have third image regions with same content.

In this implementation, the first wallpaper and the second wallpaper have third image regions with same content. That is, if the first wallpaper and the second wallpaper come from a same image (for example, the foregoing first image or second image), in the same image, the first image region corresponding to the first wallpaper and the second image region corresponding to the second wallpaper have an overlapping region, and content corresponding to the overlapping region is content of the third image region.

According to a third aspect, this application provides an electronic device. The electronic device includes: a memory, configured to store one or more programs; and a processor, configured to execute the one or more programs, to enable the electronic device to implement the wallpaper display method according to any one of the first aspect and the possible implementations of the first aspect and any one of the second aspect and the possible implementations of the second aspect.

According to a fourth aspect, this application provides a readable storage medium. The readable storage medium includes one or more programs, and when the one or more programs are executed on an electronic device, the electronic device is enabled to implement the wallpaper display method according to any one of the first aspect and the possible implementations of the first aspect and any one of the second aspect and the possible implementations of the second aspect.

According to a fifth aspect, this application provides a program product. When the program product runs on an electronic device, the electronic device is enabled to implement the wallpaper display method according to any one of the first aspect and the possible implementations of the first aspect and any one of the second aspect and the possible implementations of the second aspect.

It should be understood that for beneficial effect of the second aspect to the fifth aspect, refer to the beneficial effect described in the first aspect. Details are not described herein again.

### BRIEF DESCRIPTION OF DRAWINGS

FIG. 1 is a diagram of a change of a folding status of a mobile phone 10 according to some embodiments of this application;
FIG. 2A is a diagram of wallpaper cropping according to some embodiments of this application;
FIG. 2B is a diagram of a mobile phone 10 displaying a wallpaper P1A and a wallpaper P2A according to some embodiments of this application;
FIG. 3A is a diagram of first animation effect corresponding to a moon U0 according to some embodiments of this application;
FIG. 3B is a diagram of first animation effect corresponding to a cloud U01 and a cloud U02 according to some embodiments of this application;
FIG. 3C is a diagram of first animation effect corresponding to a ship U03 according to some embodiments of this application;
FIG. 3D is a diagram of a mobile phone 10 displaying switching animation when a moon U0 is used as a first display element according to some embodiments of this application;
FIG. 3E is a diagram of a mobile phone 10 displaying switching animation when a cloud U01 and a cloud U02 are used as first display elements according to some embodiments of this application;
FIG. 3F is a diagram of a mobile phone 10 displaying switching animation when a ship U03 is used as a first display element according to some embodiments of this application;
FIG. 4A is a diagram of a mobile phone 10 displaying a gallery interface U1 according to some embodiments of this application;
FIG. 4B is a diagram of a mobile phone 10 displaying a folded-state wallpaper setting interface U2 according to some embodiments of this application;
FIG. 4C is a diagram of a mobile phone 10 displaying an unfolded-state wallpaper setting interface U3 according to some embodiments of this application;
FIG. 4D is a diagram of a mobile phone 10 displaying an animation effect object selection interface U4 according to some embodiments of this application;
FIG. 4E is a diagram of a mobile phone 10 adjusting a folded-state wallpaper P3A according to some embodiments of this application;
FIG. 4F is a diagram of a mobile phone 10 adjusting an unfolded-state wallpaper P3B according to some embodiments of this application;
FIG. 5 is a diagram of a mobile phone 10 displaying switching animation when a vine U41, a watering can U42, a squirrel U43, and a bird U44 are used as first display elements according to some embodiments of this application;
FIG. 6A is a diagram of a mobile phone 10 displaying a gallery interface U5 according to some embodiments of this application;
FIG. 6B is a diagram of a mobile phone 10 displaying an image expansion interface U6 according to some embodiments of this application;
FIG. 6C is a diagram of a mobile phone 10 displaying an image expansion range setting interface U7 according to some embodiments of this application;
FIG. 6D is a diagram of a mobile phone 10 displaying a folded-state wallpaper setting interface U8 according to some embodiments of this application;
FIG. 6E is a diagram of a mobile phone 10 determining a region CD1 as a core region according to some embodiments of this application;
FIG. 6F is a diagram of a mobile phone 10 determining a region CD2 as a core region according to some embodiments of this application;
FIG. 6G is a diagram of a mobile phone 10 determining a region CD3 as a core region according to some embodiments of this application;
FIG. 6H is a diagram of a mobile phone 10 adjusting a core region according to some embodiments of this application;
FIG. 7 is a schematic flowchart of a wallpaper display method according to some embodiments of this application;
FIG. 8 is a diagram of a software architecture of a mobile phone 10 for identifying a first display element and generating first animation effect according to some embodiments of this application;
FIG. 9 is a diagram of a software architecture of a mobile phone 10 for implementing an image expansion function according to some embodiments of this application; and
FIG. 10 is a diagram of a structure of a mobile phone 10 according to some embodiments of this application.

### DESCRIPTION OF EMBODIMENTS

The illustrative embodiments of this application include but are not limited to a wallpaper display method, a readable storage medium, a program product, and an electronic device.

It should be understood that the wallpaper display method provided in embodiments of this application may be applied to any electronic device with a foldable display, including but not limited to a foldable mobile phone, a foldable television, a foldable computer, a foldable display, and the like. For ease of description, the following describes the technical solutions of this application by using an example in which the foldable electronic device is a mobile phone 10.

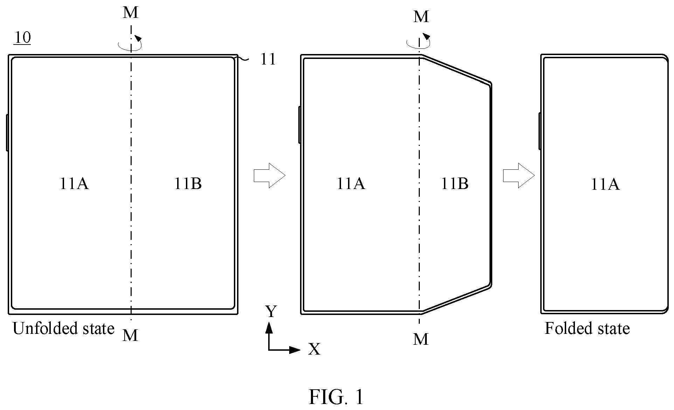

For example, FIG. 1 is a diagram of a change of a folding status of the mobile phone 10 according to some embodiments of this application.

As shown in FIG. 1, the mobile phone 10 includes a flexible screen 11, and the flexible screen 11 may be folded along a folding axis M-M (the axis M-M is parallel to a Y direction). When the mobile phone 10 is in an unfolded state (also referred to as an unfolded state), the mobile phone 10 displays a picture in an entire display region (for example, a display region 11A and a display region 11B shown in FIG. 1, and the display region 11A and the display region 11B are referred to as a display region 11C below) of the flexible screen 11. When the mobile phone 10 is in the unfolded state, the display region 11A and the display region 11B are on a same plane (or an included angle between the display region 11A and the display region 11B is less than an included angle threshold). After the display region 11B of the flexible screen 11 is folded to the rear of the display region 11A along the folding axis M-M, the mobile phone 10 is in a folded state (also referred to as a folded state), and displays a picture in the display region 11A of the flexible screen 11. It can be learned from FIG. 1 that sizes and ratios of sizes in the Y direction to sizes in an X direction of the display regions used by the mobile phone 10 to display the picture in the folded state and the unfolded state are different.

It should be understood that, in a process in which the mobile phone 10 is switched from the folded state to the unfolded state, or in a process in which the mobile phone 10 is switched from the unfolded state to the folded state, the mobile phone 10 may display the picture in the entire display region of the flexible screen 11, or may display the picture in a partial display region of the flexible screen 11.

In some cases, when a wallpaper is set for the mobile phone 10, the mobile phone 10 may perform, based on a user operation (for example, an operation in which a user selects cropping regions corresponding to an unfolded-state wallpaper and a folded-state wallpaper in a same image), cropping of different sizes and scaling up/down at different factors on the same image, to respectively obtain wallpapers displayed on the mobile phone 10 in the unfolded state and the folded state. In this way, in the process in which the mobile phone 10 is switched from the unfolded state to the folded state, or switched from the folded state to the unfolded state, a sudden change occurs in the wallpaper displayed on the mobile phone 10, affecting user experience.

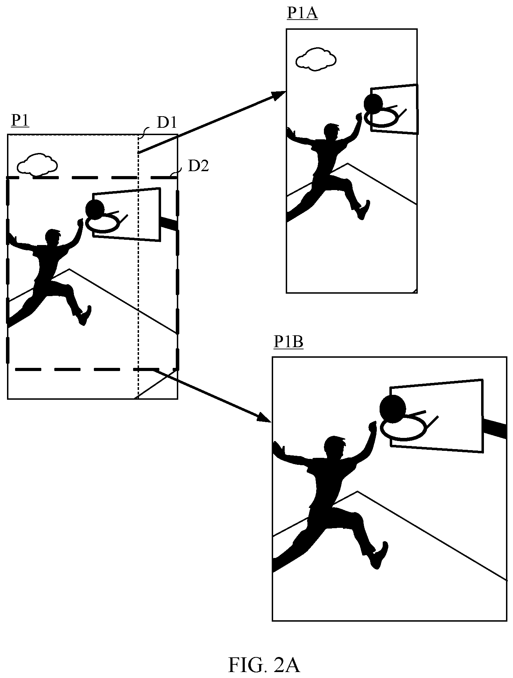

For example, FIG. 2A is a diagram of wallpaper cropping according to some embodiments of this application.

As shown in FIG. 2A, when the user needs to set a picture P1 as the wallpaper of the mobile phone 10, the mobile phone 10 may scale up/down an image region D1 based on size information (for example, the ratio of the size in the X direction to the size in the Y direction) of the display region 11C after the user selects the image region D1, to obtain a wallpaper P1A whose size is the same as a size of the display region 11C; and after the user selects an image region D2, scale up/down the image region D2 of the picture P1 based on size information (for example, the ratio of the size in the X direction to the size in the Y direction) of the display region 11B, to obtain a wallpaper P1B whose size is the same as a size of the display region 11A. Because the display region 11C and the display region 11A have a same size in the Y direction, and a size of the image region D2 in the Y direction is less than a size of the image region D1 in the Y direction, in a process of generating the wallpaper P1A and the wallpaper P1B, the mobile phone 10 needs to separately scale up/down the image region D1 and the image region D2 at different ratios. In other words, sizes of same display elements (for example, a person, a basketball, a basketball rack, and a cloud) in the wallpaper P1A and the wallpaper P1B are different. Therefore, when the mobile phone 10 displays the wallpaper P1A and the wallpaper P1B, positions of the display elements in the flexible screen 11 are also different.

In the process in which the mobile phone 10 is switched from the folded state to the unfolded state or from the unfolded state to the folded state, when a folding angle (for example, an included angle between a plane on which a rear surface of the display region 11A is located and a plane on which a rear surface of the display region 11B is located) of the mobile phone 10 reaches a preset angle, a displayed wallpaper switches from the wallpaper P1A to the wallpaper P1B, or the displayed wallpaper switches from the wallpaper P1B to the wallpaper P1A. Because the sizes and the positions of the same display elements (for example, the person, the basketball, the basketball rack, and the cloud) in the wallpaper P1A and the wallpaper P1B are different, display positions of the display elements in the flexible screen 11 before and after switching are also different, and a sudden picture change occurs during wallpaper switching.

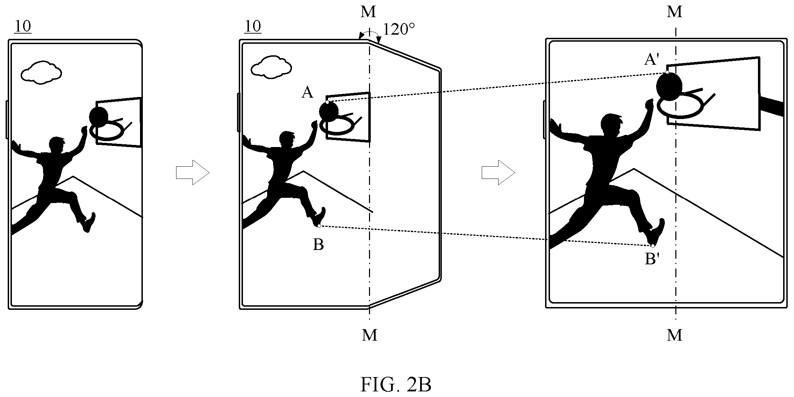

Refer to FIG. 2B. For example, the mobile phone 10 displays the wallpaper P1A when the folding angle of the mobile phone 10 is less than or equal to 120°, and displays the wallpaper P1B when the folding angle of the mobile phone 10 is greater than 120°. In addition, when the mobile phone 10 displays the wallpaper P1A, the basketball in the wallpaper P1A is located at a point A of the flexible screen 11, and a heel of the person is located at a point B of the flexible screen 11. When the mobile phone 10 displays the wallpaper P1B, the basketball in the wallpaper P1B is located at a point A' different from the point A of the flexible screen 11, and the heel of the person is located at a point B' different from the point B of the flexible screen 11. Therefore, when the folding angle of the mobile phone 10 increases from 120° or decreases from another angle to 120°, the wallpaper displayed on the mobile phone 10 is switched between the wallpaper P1A and the wallpaper P1B. Consequently, the sudden change occurs in the picture displayed on the flexible screen 11, affecting user experience.

In view of this, an embodiment of this application provides a wallpaper display method. When detecting an operation of configuring a wallpaper based on a first image by a user, the mobile phone 10 may configure a first image region of the first image as the folded-state wallpaper (a wallpaper displayed when the mobile phone 10 is in the folded state), and configure a second image region of the first image as the unfolded-state wallpaper (a wallpaper displayed when the mobile phone 10 is in the unfolded state).

Then, the mobile phone 10 may determine at least one first display element in the folded-state wallpaper and/or the unfolded-state wallpaper (or the first image region of the first image/the second image region of the first image), and generate switching animation for switching from the folded-state wallpaper to the unfolded-state wallpaper. The switching animation effect includes first animation effect of each first display element, and a playing progress of the switching animation is associated with the folding angle (for example, a folding angle of the flexible screen 11) of the mobile phone 10. In a process in which the mobile phone 10 is unfolded from the folded state to the unfolded state (or in a process in which the mobile phone 10 is folded from the unfolded state to the folded state), the mobile phone 10 may play the switching animation, so that a display status of each first display element gradually changes with the folding angle of the mobile phone 10. For example, a size of the first display element may gradually increase or decrease, a position of the first display element may gradually move from one position to another position, a rotation angle of the first display element may rotate from one angle to another angle, and a form of the first display element may gradually change from a first form to a second form. In this way, the picture displayed on the mobile phone 10 may gradually change, instead of directly suddenly changing from the unfolded state to the folded state, thereby improving user experience.

For example, in some embodiments, if display statuses (for example, forms, sizes, positions, rotation angles, occlusion relationships with another display element, and whether to display) of the first display element in the folded-state wallpaper and the unfolded-state wallpaper are the same, the mobile phone 10 may adjust the display statuses/the display status of the first display element in the folded-state wallpaper and/or the unfolded-state wallpaper, so that the display statuses of the first display element in the folded-state wallpaper and the unfolded-state wallpaper are different (for example, the display status of the first display element in the folded-state wallpaper is a first display state, and the display status of the first display element in the unfolded-state wallpaper is a second display state). Then, the mobile phone 10 may generate the first animation effect in which each first display element switches from the first display state to the second display state. The first animation effect may include a plurality of frames of animation effect images of a process in which each first display element gradually switches from the first display state to the second display state.

It should be understood that, if the mobile phone 10 adjusts the folded-state wallpaper and/or the unfolded-state wallpaper, the mobile phone 10 may use an adjusted folded-state wallpaper as the folded-state wallpaper, and/or use an adjusted unfolded-state wallpaper as the unfolded-state wallpaper.

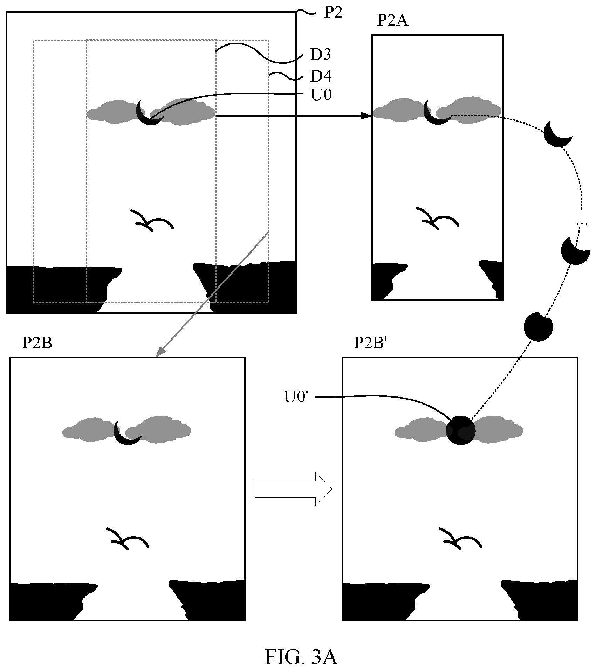

Refer to FIG. 3A. For example, the mobile phone 10 scales up/down, at a first ratio based on a user operation, an image region D3 of an image P2 into a folded-state wallpaper P2A, and scales up/down, at the first ratio based on the user operation, an image region D4 of the image P2 into an unfolded-state wallpaper P2B. The mobile phone 10 may use a moon U0 that exists in both the folded-state wallpaper P2A and the unfolded-state wallpaper P2B as the first display element. Because display statuses of the moon U0 in the folded-state wallpaper P2A and the unfolded-state wallpaper P2B are the same (sizes are the same, forms are the same (both are crescent moons), positions relative to another display element are the same, occlusion relationships with another display element are the same, and rotation angles are the same), the mobile phone 10 may change the form of the moon U0 in the unfolded-state wallpaper P2B from the crescent moon (as the first display state) to a full moon (as the second display state), to obtain a moon U0', so as to adjust the unfolded-state wallpaper P2B to an unfolded-state wallpaper P2B'. Then, the mobile phone 10 may generate first animation effect in which the moon U0 changes to the moon U0' (namely, a plurality of frames of images in which the moon U0 changes to the moon U0').

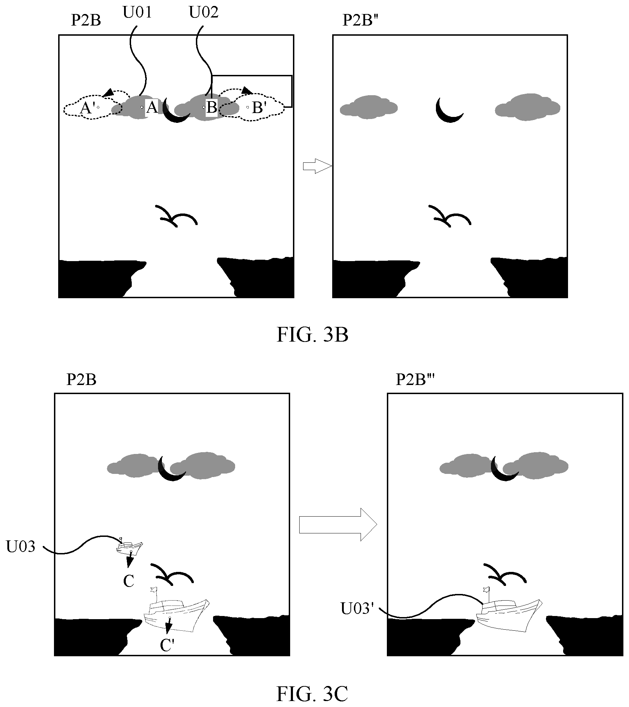

Refer to FIG. 3B. For another example, corresponding to the folded-state wallpaper P2A and the unfolded-state wallpaper P2B, the mobile phone 10 may also determine a cloud U01 and a cloud U02 as first display elements. Because display statuses of the cloud U01 and the cloud U02 in the folded-state wallpaper P2A and the unfolded-state wallpaper P2B are the same, the mobile phone 10 may adjust the cloud U01 from a position A to a position A', and adjust the cloud U02 from a position B to a position B' in the unfolded-state wallpaper P2B (the cloud U01 at the position A may be referred to as being in the first display state, the cloud U01 at the position A' may be referred to as being in the second display state, the cloud U02 at the position B may be referred to as being in the first display state, and the cloud U02 at the position B' may be referred to as being in the second display state), to obtain a wallpaper P2B". Then, the mobile phone 10 may generate first animation effect in which the cloud U01 moves from the position A to the position A' and the cloud U02 moves from the position B to the position B'.

Refer to FIG. 3C. For another example, corresponding to the folded-state wallpaper P2A and the unfolded-state wallpaper P2B, the mobile phone 10 may also determine a ship U03 as the first display element. Because display statuses of the ship U03 in the folded-state wallpaper P2A and the unfolded-state wallpaper P2B are the same, the mobile phone 10 may adjust the ship U03 from a position C to a position C', and scale up the ship U03 to a ship U03' in the unfolded-state wallpaper P2B (the ship U03 at the position C may be referred to as being in the first display state, and the scaled-up ship U03' at the position C' may be referred to as being in the second display state), to obtain a wallpaper P2B"'. Then, the mobile phone 10 may generate first animation effect in which the ship U03 moves from the position C to the position C' and gradually scales up to the ship U03'.

For example, in some embodiments, if the display statuses of the first display element in the folded-state wallpaper and the unfolded-state wallpaper are different (for example, the first display state in the folded-state wallpaper and the second display state in the unfolded-state wallpaper), the mobile phone 10 may directly generate the first animation effect in which each first display element switches from the first display state to the second display state (for example, a plurality of frames of animation effect images of a process in which each first display element switches from the first display state to the second display state).

For example, in some embodiments, even if the display statuses of the first display element in the folded-state wallpaper and the unfolded-state wallpaper are different, the mobile phone 10 may adjust the display statuses/the display status of the first display element in the folded-state wallpaper and/or the unfolded-state wallpaper. This is not limited herein.

In this way, in the process of switching from the folded state to the unfolded state or switching from the unfolded state to the folded state, the mobile phone 10 may play switching animation based on the folding angle of the mobile phone 10. The display statuses of each first display element in the switching animation gradually change, so that in a changing process of the folding status of the mobile phone 10, the picture displayed on the flexible screen 11 is not directly switched to a wallpaper to be displayed, but gradually changes with playing of each piece of first animation effect. This helps improve user experience. For example, it is assumed that the animation effect of the first display element includes M frames of images, and a range of the folding angle of the mobile phone 10 is 0° to 80°. When the folding angle of the mobile phone 10 is X°, an interface displayed on the mobile phone 10 includes an X°/180°×M^{th} frame of image in the M frames of images.

In some embodiments, the folded state of the mobile phone 10 may be a state in which a display is fully folded. In this state, the mobile phone 10 displays the picture in the partial display region of the flexible screen (for example, the display region 11A). The unfolded state of the mobile phone 10 may be a state in which the display is fully unfolded. In this state, the mobile phone 10 displays the picture in the entire display region of the flexible screen.

In some embodiments, the folded-state wallpaper and the unfolded-state wallpaper have third image regions with same content, and sizes of content in the third image regions in the folded-state wallpaper and the unfolded-state wallpaper are the same (that is, a scaling up/down factor of the folded-state wallpaper relative to the first image region is the same as a scaling up/down factor of the unfolded-state wallpaper relative to the second image region). In this way, it can be ensured that in a process of switching between the folded-state wallpaper and the unfolded-state wallpaper, image scaling up/down does not occur, and picture changes visually felt by the user is reduced.

In some embodiments, if the mobile phone 10 displays the folded-state wallpaper, the third image region is displayed at a first position on the flexible screen 11, and if the mobile phone 10 displays the unfolded-state wallpaper, the third image region is displayed at a second position on the flexible screen 11. The switching animation may further include animation effect of the folded-state wallpaper, for example, animation effect in which the folded-state wallpaper gradually moves as the folding angle of the flexible screen increases, and switching animation effect in which the third image region of the folded-state wallpaper gradually moves from the first position to the second position in a gradual moving process of the folded-state wallpaper. In some embodiments, display time of the switching animation effect of the folded-state wallpaper may be before display time of each piece of first animation effect, or at least a part of display time of the switching animation effect overlaps display time of each piece of first animation effect.

In some embodiments, the switching animation may further include displaying gradual change animation effect of the unfolded-state wallpaper, so that a part other than the third image region of the unfolded-state wallpaper may gradually appear. For example, the gradual change animation effect may be animation effect in which other image content in a region other than the third image region of the unfolded-state wallpaper is displayed by extending outward from the third image region. In other words, other image content in the region other than the third image region of the unfolded-state wallpaper may be gradually displayed on the flexible screen as the folding angle changes. In this way, a transition process between the folded-state wallpaper and the unfolded-state wallpaper can be smooth, and the sudden picture change can be avoided. In some embodiments, the gradual change animation effect of the unfolded-state wallpaper may be after the switching animation effect of the folded-state wallpaper.

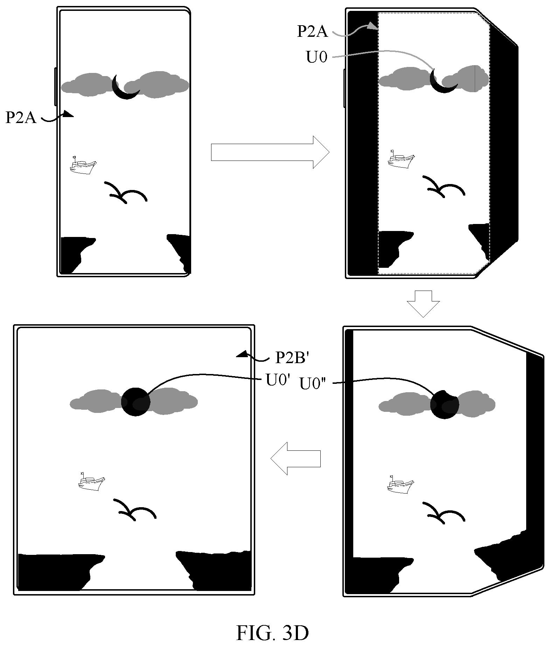

Refer to FIG. 3D. For example, for the folded-state wallpaper P2A and the unfolded-state wallpaper P2B' shown in FIG. 3A, the mobile phone 10 may display the folded-state wallpaper P2A when the flexible screen 11 is folded. In the process in which the mobile phone 10 is unfolded from the folded state to the unfolded state, as the folding angle of the flexible screen 11 gradually increases, the mobile phone 10 may play switching animation effect in which the folded-state wallpaper P2A moves from a position at which the folded-state wallpaper P2A is displayed when the mobile phone 10 is folded to a position in the middle of the flexible screen 11 (after the animation effect ends, a position at which another display element other than the first display element in the folded-state wallpaper P2A is displayed is the same as a position at which the partial display element is displayed when the unfolded-state wallpaper P2B' is displayed). Then, as the folding angle of the flexible screen 11 gradually increases, the mobile phone 10 may display the first animation effect in which the moon U0 gradually changes to the moon U0' (the moon gradually changes from the crescent moon to the full moon), and gradually display a region that is in the unfolded-state wallpaper P2B' and that does not overlap the folded-state wallpaper P2A (as shown in the figure, black borders gradually decrease as the folding angle increases) (as the gradual change animation effect of the unfolded-state wallpaper). Finally, after the flexible screen 11 is fully unfolded (the display region 11A and the display region 11B are on a same plane, or the included angle between the display region 11A and the display region 11B is less than the included angle threshold, for example, after the mobile phone 10 is unfolded to the unfolded state), the mobile phone 10 may display the unfolded-state wallpaper P2B'.

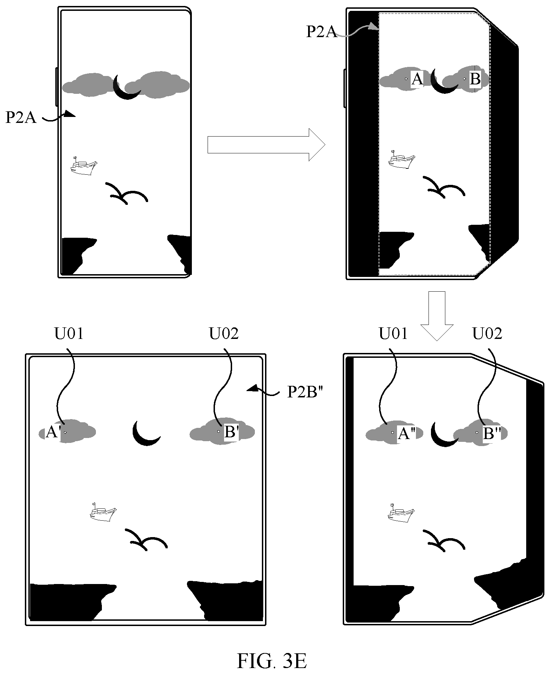

Refer to FIG. 3E. For another example, for the folded-state wallpaper P2A and the unfolded-state wallpaper P2B" shown in FIG. 3B, the mobile phone 10 may display the folded-state wallpaper P2A when the flexible screen 11 is folded. In the process in which the mobile phone 10 is unfolded from the folded state to the unfolded state, as the folding angle of the flexible screen 11 gradually increases, the mobile phone 10 may play switching animation effect in which the folded-state wallpaper P2A moves from the position at which the folded-state wallpaper P2A is displayed when the mobile phone 10 is folded to the position in the middle of the flexible screen 11 (after the animation effect ends, a position at which another display element other than the first display element in the folded-state wallpaper P2A is displayed is the same as a position at which the partial display element is displayed when the unfolded-state wallpaper P2B" is displayed). Then, as the folding angle of the flexible screen 11 gradually increases, the mobile phone 10 may display animation effect in which the cloud U01 gradually moves from the position A to the position A' (for example, the cloud U01 may gradually move from the position A to the position A", and gradually move from the position A" to the position A'), and the cloud U02 gradually moves from the position B to the position B' (for example, the cloud U02 may gradually move from the position B to the position B", and gradually move from the position B" to the position B'), and gradually display a region that is in the unfolded-state wallpaper P2B" and that does not overlap the folded-state wallpaper P2A (as shown in the figure, the black borders gradually decrease as the folding angle increases) (as the gradual change animation effect of the unfolded-state wallpaper). Finally, after the flexible screen 11 is fully unfolded (the display region 11A and the display region 11B are on the same plane, or the included angle between the display region 11A and the display region 11B is less than the included angle threshold), the mobile phone 10 may display the unfolded-state wallpaper P2B".

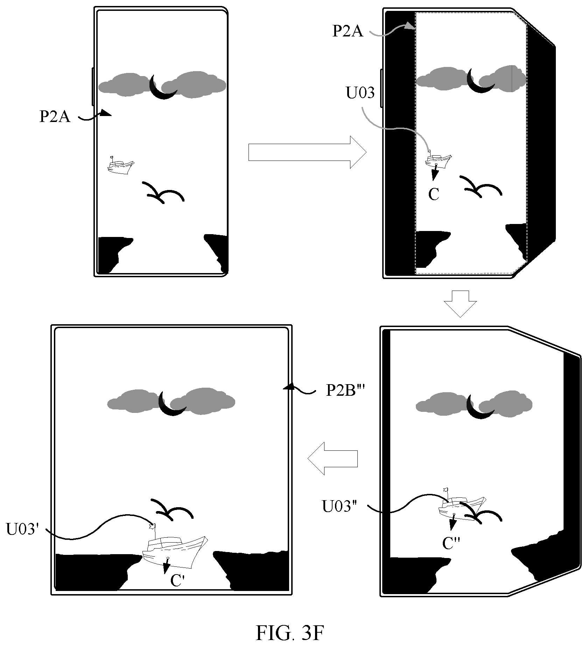

Refer to FIG. 3F. For another example, for the folded-state wallpaper P2A and the unfolded-state wallpaper P2B‴ shown in FIG. 3C, the mobile phone 10 may display the folded-state wallpaper P2A when the flexible screen 11 is folded. In the process in which the mobile phone 10 is unfolded from the folded state to the unfolded state, as the folding angle of the flexible screen 11 gradually increases, the mobile phone 10 may play switching animation effect in which the folded-state wallpaper P2A moves from the position at which the folded-state wallpaper P2A is displayed when the mobile phone 10 is folded to the position in the middle of the flexible screen 11 (after the animation effect ends, a position at which another display element other than the first display element in the folded-state wallpaper P2A is displayed is the same as a position at which the partial display element is displayed when the unfolded-state wallpaper P2B‴ is displayed). Then, as the folding angle of the flexible screen 11 gradually increases, the mobile phone 10 may display animation effect in which the ship U03 gradually moves from the position C to the position C' and the ship U03' gradually scales up (for example, the ship may gradually move from the ship U03 at the position C to the position C" and gradually scale up to the U03", and then gradually move from the ship U03" at the position C" to the position C' and gradually scale up to the U03'), and gradually display a region that is in the unfolded-state wallpaper P2B‴ and that does not overlap the folded-state wallpaper P2A (as shown in the figure, the black borders gradually decrease as the folding angle increases) (as the gradual change animation effect of the unfolded-state wallpaper). Finally, after the flexible screen 11 is fully unfolded (the display region 11A and the display region 11B are on the same plane, or the included angle between the display region 11A and the display region 11B is less than the included angle threshold, for example, after the mobile phone 10 is unfolded to the unfolded state), the mobile phone 10 may display the unfolded-state wallpaper P2B".

In some embodiments, the first animation effect may include at least one of the following pieces of animation effect.

Animation effect in which the first display element switches from a first form to a second form. For example, when the first display element is a moon, the animation effect may be animation effect in which the moon changes from a crescent moon to a full moon as the folding angle of the mobile phone 10 changes, or animation effect in which the full moon changes to the crescent moon. For another example, when the first display element is a plant (or an animal), the animation effect may be animation effect in which the plant (or the animal) gradually grows as the folding angle of the mobile phone 10 changes, or animation effect in which the plant (or the animal) gradually undergoes reverse growth as the folding angle of the mobile phone 10 decreases. For another example, if the first display element is a watering can, the first form may be a non-watering form of the watering can, and the second form may be a watering form of the watering can. For another example, if the first display element is a person, the first form may be a first motion posture (for example, standing, jumping, lying down, or running) of the person, and the second form may be a second motion posture different from the first motion posture of the person.

Animation effect in which an occlusion relationship between the first display element and a second display element changes. For example, in the folded-state wallpaper, the first display element and the second display element may have a first occlusion relationship, and in the unfolded-state wallpaper, the first display element and the second display element may have a second occlusion relationship. The first animation effect may be animation effect in which the occlusion relationship between the first display element and the second display element switches from the first occlusion relationship to the second occlusion relationship (for example, animation effect in which at least one of the first display element and the second display element moves). For example, it is assumed that the folded-state wallpaper includes the moon (as the first display element) and the cloud (as the second display element), the first animation effect may be animation in which an area of the cloud occluding the moon increases or decreases by moving the moon and/or the cloud.

Animation effect in which a size, a position, or a rotation angle of the first display element changes. For example, if the first display element is located at a third position of the folded-state wallpaper and is located at a fourth position of the unfolded-state wallpaper, the first animation effect may be animation effect in which the first display element moves from the third position to the fourth position, or the first display element moves from the fourth position to the third position. In some embodiments, the first animation effect may alternatively be animation effect in another form. This is not limited herein.

In some embodiments, corresponding switching animation of the process in which the mobile phone 10 is folded from the unfolded state to the folded state may be reverse animation of the switching animation of the process in which the mobile phone 10 is unfolded from the folded state to the unfolded state.

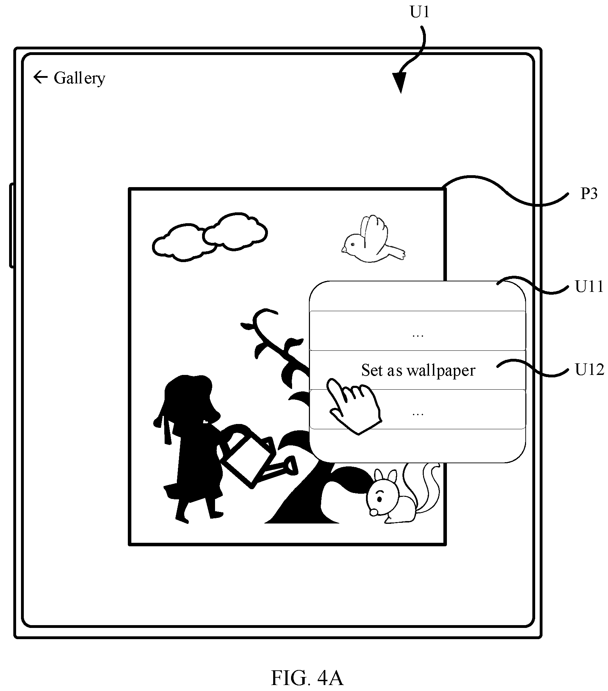

For example, FIG. 4A to FIG. 4F are diagrams of interfaces displayed on the mobile phone 10 during configuration of a wallpaper according to some embodiments of this application.

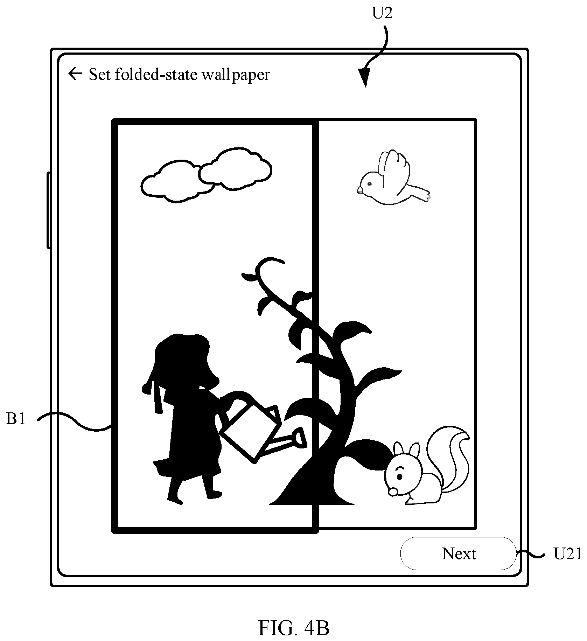

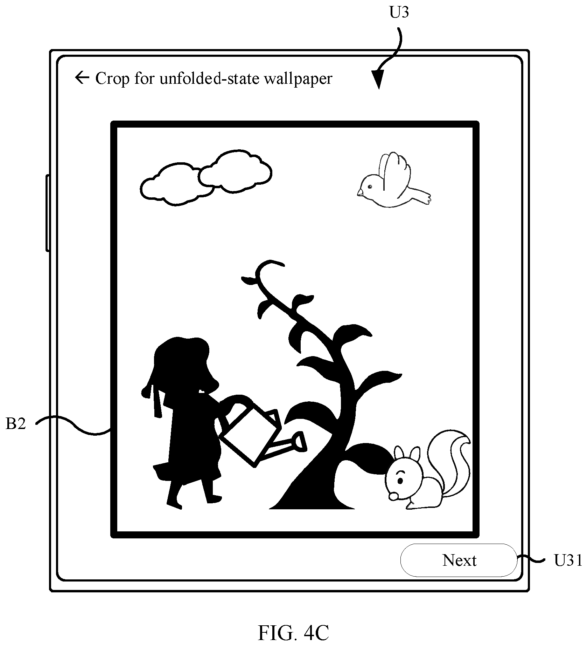

As shown in FIG. 4A, when detecting an operation of touching and holding an image P3 on a gallery interface U1 by a user, the mobile phone 10 may display an option menu U11. The option menu U11 includes an option U12 of "Set as wallpaper". Refer to FIG. 4B. After detecting an operation of selecting the option U12 of "Set as wallpaper" by the user, the mobile phone 10 may display an interface U2 of "Set folded-state wallpaper". The interface U2 of "Set folded-state wallpaper" may include a cropping box B1. The user may set, by moving or scaling up/down the cropping box (or an image P3), an image region (as the first image region) that is in the image P3 and that corresponds to the folded-state wallpaper. After detecting an operation of selecting a "Next" control U21 on the interface U2 of "Set folded-state wallpaper" by the user, the mobile phone 10 may use an image region cropped in the cropping box B1 as the folded-state wallpaper P3A, and display an interface U3 of "Set unfolded-state wallpaper" shown in FIG. 4C. The interface U3 of "Set unfolded-state wallpaper" may include a cropping box B2, a size, in a Y direction, of an image region selected in the cropping box B2 is the same as a size, in the Y direction, of the first image region (to ensure that sizes of regions with same content (for example, the image region cropped in the cropping box B1 in FIG. 4B) in the unfolded-state wallpaper and the folded-state wallpaper that are obtained through cropping based on the cropping box B2 are the same). The user may set, by moving the cropping box (or the image P3), an image region that is in the image P3 and that corresponds to the unfolded-state wallpaper (as the second image region).

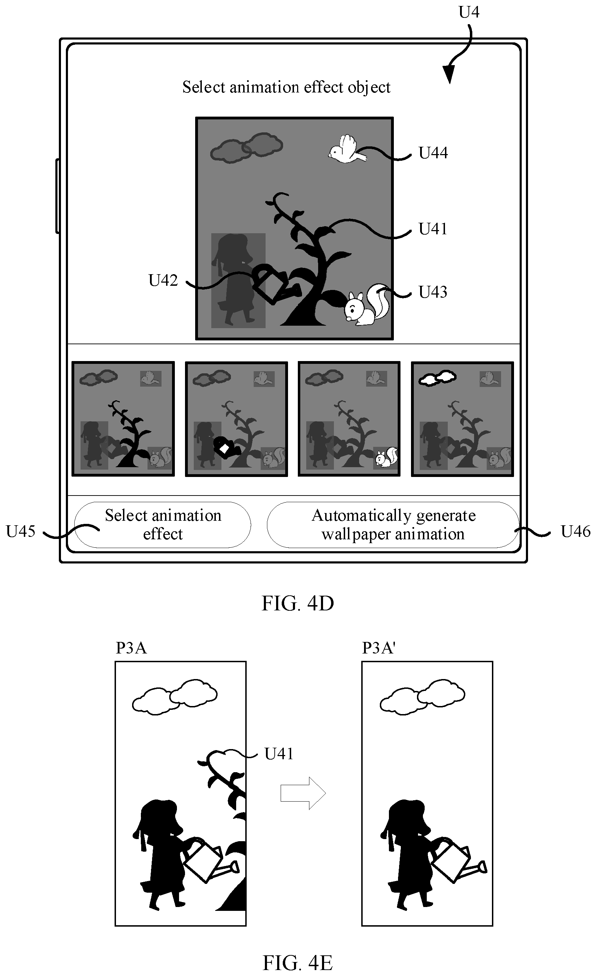

After detecting an operation of selecting the "Next" control U31 on the interface U3 of "Set unfolded-state wallpaper" by the user, the mobile phone 10 may use the image region cropped in the cropping frame B2 as the folded-state wallpaper P3B. Then, the mobile phone 10 may determine a display element in the folded-state wallpaper P3A or the unfolded-state wallpaper P3B or the image P3, and display an animation effect object selection interface U4 shown in FIG. 4D. On the animation effect object selection interface U4, the mobile phone 10 may highlight (or may display in another form) an identified display element (for example, a vine U41, a watering can U42, a squirrel U43, and a bird U44 in FIG. 4D). The user may select an animation effect object (as the first display element) and animation effect corresponding to the animation effect object by performing an operation on each display element on the animation effect object selection interface U4. For example, after the user selects a display element, if detecting an operation of selecting a control U45 of "Select animation effect" by the user, the mobile phone 10 may display at least one piece of animation effect (which may be animation effect generated in real time by the mobile phone 10, or may be animation effect preset in the mobile phone 10, or may be animation effect obtained by the mobile phone 10 from a server) supported by the display element, and then use animation effect selected by the user from the at least one piece of animation effect as first animation effect of the display element.

For example, corresponding to the process in which the mobile phone 10 is unfolded from the folded state to the unfolded state, corresponding to the vine U41, the first animation effect may be that the vine U41 grows from a seedling to the vine U41; corresponding to the watering can U42, the first animation effect may be that the watering can U42 sprinkles water; and corresponding to the squirrel U43 and the bird U44, the first animation effect may be animation effect in which the squirrel U43 and the bird U44 move from a right side (a positive direction of the X-axis shown in FIG. 1) of the flexible screen 11 to a left side (a negative direction of the X-axis shown in FIG. 1).

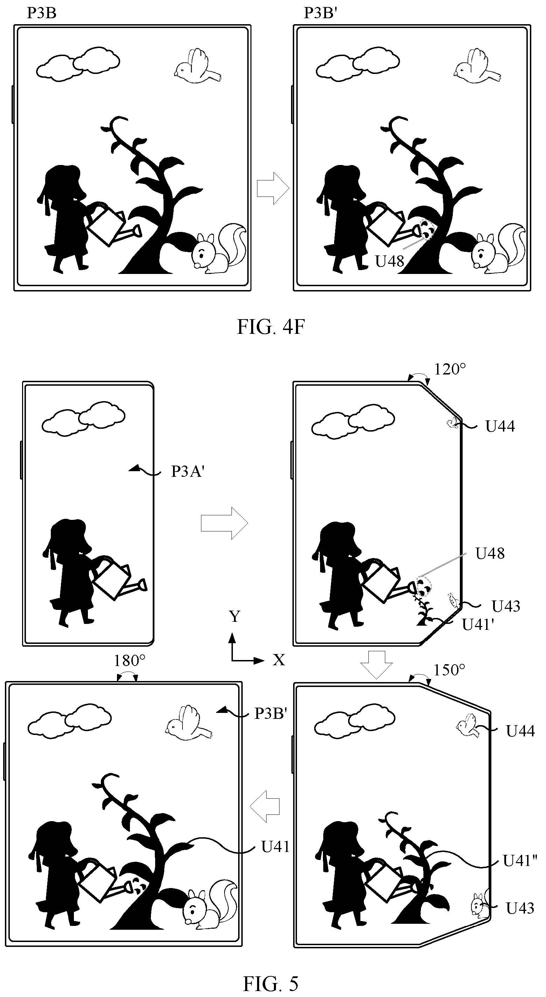

Optionally, the mobile phone 10 may further adjust, based on the display element and the first animation effect selected by the user, a display status of each display element in the folded-state wallpaper and/or the unfolded-state wallpaper, so that display statuses of display elements in the folded-state wallpaper and the unfolded-state wallpaper match the first animation effect. For example, it is assumed that first display elements selected by the user includes the vine U41, the watering can U42, the squirrel U43, and the bird U44, and the vine U41 and the watering can U42 are displayed in both the folded-state wallpaper P3A and the unfolded-state wallpaper P3B and have a same size (that is, in a same display status). The mobile phone 10 may adjust display statuses of the vine U41 and the watering can U42. Refer to FIG. 4E. For example, the mobile phone 10 may delete the vine U41 from the folded-state wallpaper P3A (or replace the vine U41 with an image of a seedling of the vine U41) to obtain a folded-state wallpaper P3A'. Refer to FIG. 4F. The mobile phone 10 adds water drops U48 in the unfolded-state wallpaper P3B to obtain an unfolded-state wallpaper P3B'. However, because the squirrel U43 and the bird U44 are not displayed in the folded-state wallpaper P3A (that is, display statuses are different in the unfolded-state wallpaper), the mobile phone 10 may not adjust the display statuses of the squirrel U43 and the bird U44.

After detecting an operation of selecting a control of "Automatically generate wallpaper animation effect" on the animation effect object selection interface U4 by the user, the mobile phone 10 may generate, based on first animation effect selected by the user for each display element (if the user does not select first animation effect, one piece of animation effect is automatically generated or selected), switching animation for unfolding the mobile phone 10 from the folded state to the unfolded state (or folding from the folded state to the unfolded state). The switching animation may include the first animation effect corresponding to each display element, and a playing progress of the switching animation is associated with the folding angle of the mobile phone 10.

Optionally, after generating the switching animation, the mobile phone 10 may further display a preview interface of the switching animation for reference by the user.

After the switching animation is generated, when the folding status of the mobile phone 10 is changed, the mobile phone 10 may display the switching animation based on the folding angle of the mobile phone 10.

For example, it is assumed that the first display elements selected by the user includes the vine U41, the watering can U42, the squirrel U43, and the bird U44. Refer to FIG. 5. In the process in which the mobile phone 10 is unfolded from the folded state to the unfolded state, a picture displayed on the mobile phone 10 may be effect in which the vine U41 continuously grows (a size continuously increases), the watering can U42 continuously sprinkles water, and the squirrel U43 and the bird U44 gradually move from the positive direction of the X-axis to the negative direction of the X-axis of the flexible screen 11. In the process in which the flexible screen 11 is folded from the unfolded state to the folded state, the switching animation may be reverse animation of the foregoing animation, namely, in the process in which the flexible screen 11 is unfolded from the unfolded state to the folded state, animation in which the vine U41 undergoes reverse growth, the water drops of the watering can U42 return to the watering can, the squirrel U43 and the bird U44 move from the negative direction of the X-axis to the positive direction of the X-axis the flexible screen 11 until disappearing. Specifically, when the flexible screen 11 is in the folded state, the mobile phone 10 displays the wallpaper P3A'. When the folding angle of the flexible screen 11 of the mobile phone 10 is 120°, in the picture displayed on the flexible screen 11, the watering can U41 sprinkles water, an image U41' of a seedling of the vine U41 is displayed, and the squirrel U43 and the bird U44 appear on a right edge of the flexible screen 11. When the folding angle of the flexible screen 11 of the mobile phone 10 is 150°, in the picture displayed on the flexible screen 11, the watering can U41 sprinkles water, and in comparison with that in the picture displayed when the folding angle of the flexible screen 11 is 120°: a size of the vine U41 increase to a vine U41", and a distance between the squirrel U43 and the right edge of the flexible screen 11 and a distance between the bird U44 and the right edge of the flexible screen 11 increase. When the flexible screen 11 is in the unfolded state, the flexible screen 11 displays the wallpaper P3B', and in comparison with that in the picture displayed when the folding angle of the flexible screen 11 is 150°: the size of the vine U41 increases, and the distance between the squirrel U43 and the right edge of the flexible screen 11 and the distance between the bird U44 and the right edge of the flexible screen 11 increase.

Based on the foregoing method, in a process in which a folding form of the mobile phone 10 changes (for example, the mobile phone 10 is unfolded from the folded state to the unfolded state or is folded from the unfolded state to the folded state), switching animation of first animation effect of each first display element may be included, so that wallpaper switching is smooth and natural, and a sudden picture change is avoided, thereby helping improve user experience.

In some embodiments, when detecting an operation of setting a wallpaper based on the first image by the user, the mobile phone 10 may provide a function of expanding the first image, and expand the first image to a second image based on a user operation (which may alternatively be automatic processing). In addition, the folded-state wallpaper may be obtained based on the first image region of the first image (or the second image), and the unfolded-state wallpaper may be obtained based on a second image region of the second image. For example, when detecting an operation of setting the first image as the wallpaper by the user, the mobile phone 10 may prompt the user to perform image expansion on the first image when an image expansion condition is met. In some embodiments, the image expansion condition may include at least one of the following conditions:
detecting that a resolution of the first image (or a subject in the first image) is less than a preset resolution;
detecting that a difference between a ratio of the subject in the first image in the X direction and the Y direction and a ratio of the flexible screen 11 in the X direction and the Y direction is greater than a preset difference;
detecting that after the user selects the folded-state wallpaper from the first image by using a first size, a size of the first image in the X direction is less than a size of an unfolded-state wallpaper corresponding to the first size in the X direction (a size of the first size in the Y direction×a ratio of the size of the flexible screen 11 in the X direction to the size of the flexible screen 11 in the Y direction), where for example, it is assumed that the ratio of the size of the flexible screen 11 in the X direction to the size of the flexible screen 11 in the Y direction is A, and the size of the first size in the Y direction is y1, in this case, the size of the unfolded-state wallpaper corresponding to the first size in the X direction is A×y1; and if the size of the first image in the X direction is less than A×y1, it is determined that the image expansion condition is met; and
detecting that the user confirms to perform an image expansion operation.

Optionally, in some other embodiments, the image expansion condition may include more or fewer conditions. This is not limited herein.

In some embodiments, performing image expansion on an image means outwardly extending the image based on content in the image, and filling, in an extending part, image content associated with current content of the image, so that a size and content of the image are increased.

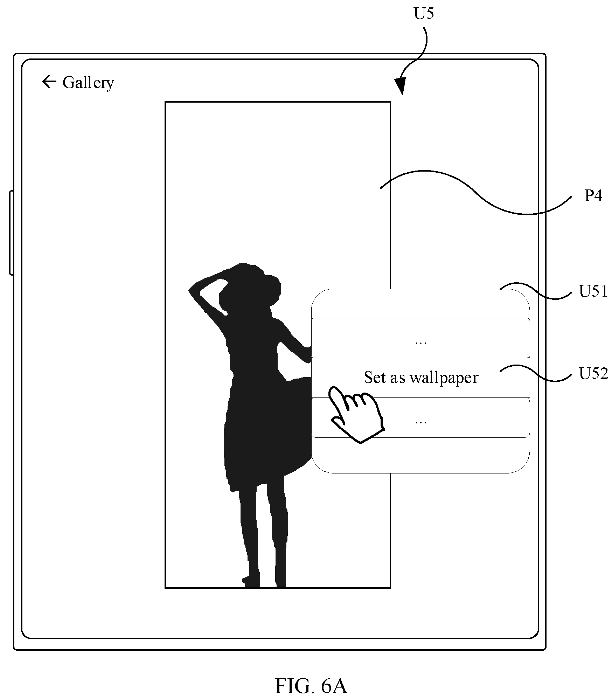

For example, FIG. 6A to FIG. 6D are diagrams of interfaces displayed on the mobile phone 10 in a process in which the mobile phone 10 performs image expansion on the first image according to some embodiments of this application.

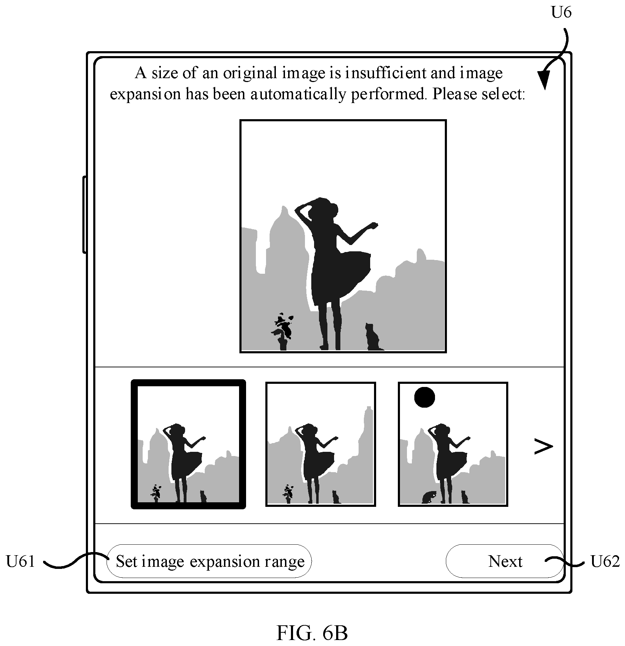

Refer to FIG. 6A. When detecting an operation of touching and holding an image P4 (as the first image) on a gallery interface U5 by the user, the mobile phone 10 may display an option menu U51. The option menu U51 includes an option U52 of "Set as wallpaper". Refer to FIG. 6B. After detecting an operation of selecting the option U52 of "Set as wallpaper" by the user, if it is determined that the image expansion condition is met, the mobile phone 10 may automatically perform image expansion on the image P4, to obtain at least one image expansion result, and display the obtained image expansion result on an image expansion interface U6. The image expansion interface U6 may include each image expansion result (image content is richer than that of an image of the image P4) generated by the mobile phone 10, a control U61 of "Set image expansion range", and a next control U62.

In some embodiments, after detecting an operation of selecting an image expansion result in the image expansion results and selecting the next control U62 by the user, the mobile phone 10 may use the image expansion result selected by the user as the second image to configure the wallpaper. For a specific process, refer to the foregoing configuration process for the image P1. Details are not described herein again.

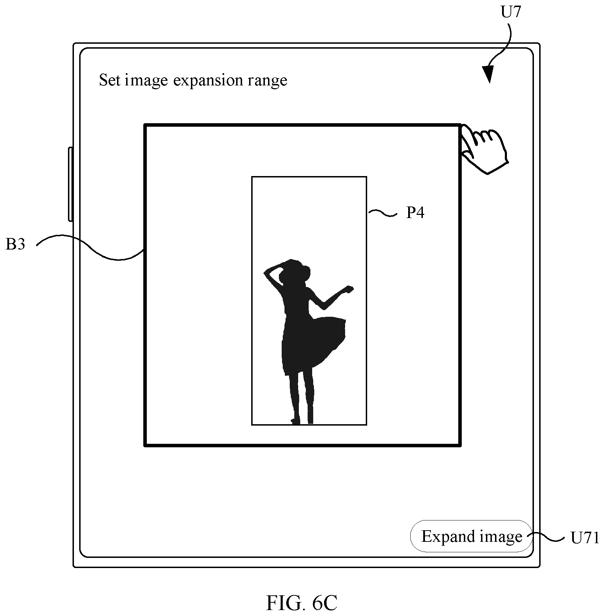

In some embodiments, after detecting a selection operation of the user on the control U61 of "Set image expansion range", the mobile phone 10 may display an image expansion range setting interface U7 shown in FIG. 6C. The image expansion range setting interface U7 may include an image P4 and a cropping box B3 indicating a size of an image obtained through image expansion on the image P4. The user may set, by adjusting positions/a position and sizes/ a size of the cropping box B3 and/or the image P4, a size of the image obtained through image expansion on the image P4 and a size of the image expansion in each direction. After detecting an operation of selecting an "Expand" control U71 by the user, the mobile phone 10 may perform image expansion on the image P4 based on a size selected by the user, to obtain one or more image expansion results, and display the one or more image expansion results.

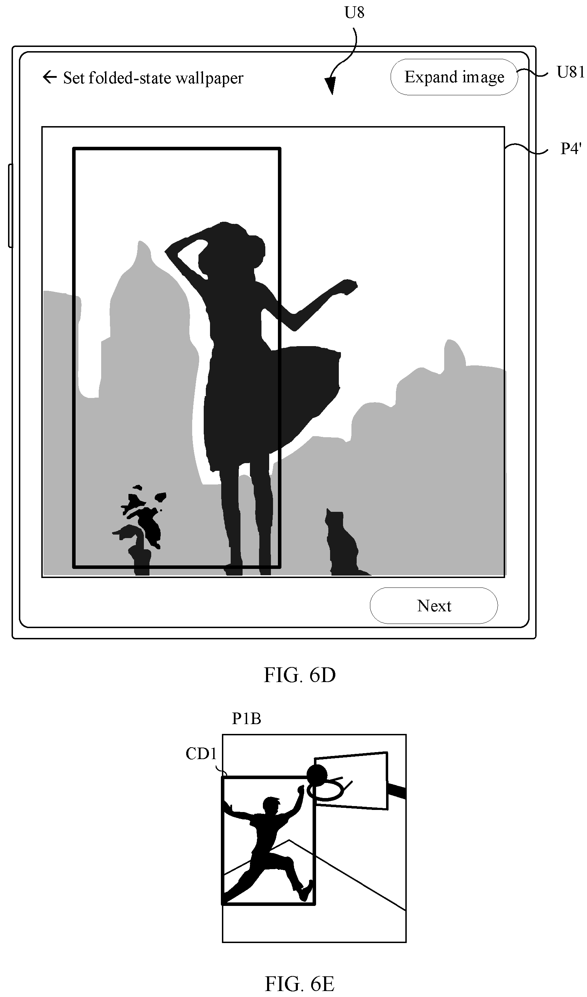

In some embodiments, the mobile phone 10 may alternatively display an image expansion control on the folded-state wallpaper setting interface for (for example, the folded-state wallpaper setting interface U2) and/or the unfolded-state wallpaper setting interface (for example, the unfolded-state wallpaper setting interface U3), and when detecting an operation of the user on the image expansion control, perform image expansion on an image currently selected by the user. Refer to FIG. 6D. For example, the mobile phone 10 may display an "Expand image" control U81 on a folded-state wallpaper setting interface U8 for an image P4' (for example, the image P4' may be the image obtained through image expansion on the image P4). If the user needs to perform image expansion on the current image P4' again, the user may select the "Expand image" control U81. After detecting a selection operation of the user on the "Expand image" control U81, the mobile phone 10 may perform image expansion on the image P4'.

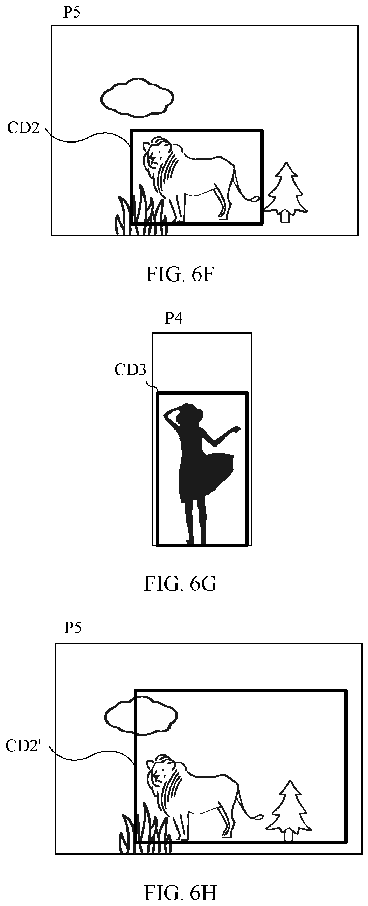

In some implementations, in a process of performing image expansion on the first image, the mobile phone 10 may automatically identify a core region (for example, a region in which a subject like a portrait or an animal is located) in the image, and automatically perform image expansion by using the core region as a center. Refer to FIG. 6E. For example, for the image P1B, the mobile phone 10 may determine a region CD1 in which the portrait is located as the core region. Refer to FIG. 6F. Corresponding to the image P5, the mobile phone 10 may identify a region CD2 in which a lion is located as the core region. Refer to FIG. 6G. For the image P4, the mobile phone 10 may identify a region CD3 in which the portrait is located as the core region.

In some implementations, in the process of performing image expansion on the first image, after identifying the core region (for example, the region in which the subject like the portrait or the animal is located) in the image, the mobile phone 10 may also modify the core region in response to a user operation, and automatically perform image expansion by using a modified core region as the center. Refer to FIG. 6H. For example, for the case shown in FIG. 6F, the mobile phone 10 may adjust the core region from the region CD2 to a region CD2' in response to a user operation (for example, an operation of dragging an edge of the region CD2 by the user).

It should be understood that, when adjusting a range of the core region in response to the user operation, the mobile phone 10 may limit the range of the core region selected by the user to the inside of the image, to avoid that the core region selected by the user includes a blank region outside the image. This avoids poor image expansion quality caused by existence of the blank region.

In some implementations, in the process of performing image expansion on the first image, after obtaining the core region (for example, the region in which the subject like the portrait or the animal is located) selected by the user in the image, the mobile phone 10 may automatically perform image expansion by using the core region selected by the user as the center.

It should be understood that the core region is the region in which the subject (namely, a main object indicating thematic content of the image) in the image is located.

It should be understood that the first animation effect and the display element shown in the foregoing embodiments are merely examples. In some other embodiments, for a same display element or different display elements, first animation effect different from that in the foregoing embodiments may be used. This is not limited herein.

The following describes the technical solutions of this application with reference to FIG. 1 to FIG. 6D.

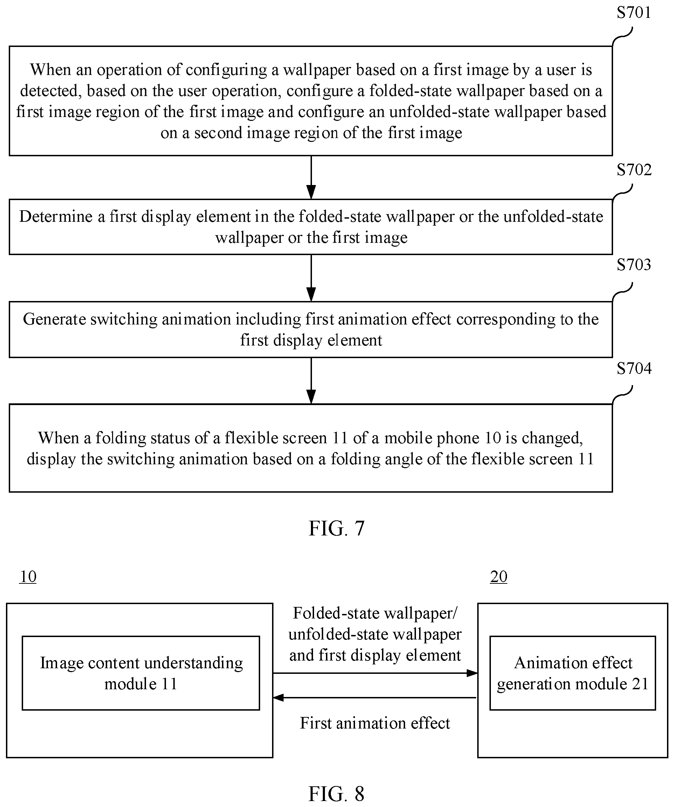

For example, FIG. 7 is a schematic flowchart of a wallpaper display method according to some embodiments of this application. The procedure is executed by a mobile phone 10 (or another electronic device). As shown in FIG. 7, the procedure includes the following steps.

S701: When an operation of configuring a wallpaper based on a first image by a user is detected, based on the user operation, configure a folded-state wallpaper based on a first image region of the first image and configure an unfolded-state wallpaper based on a second image region of the first image.

For example, when detecting the operation of configuring the wallpaper based on the first image by the user, based on the user operation, the mobile phone 10 may configure the first image region of the first image as the folded-state wallpaper and configure the second image region of the first image as the unfolded-state wallpaper.

In some embodiments, the operation of configuring the wallpaper based on the first image by the user may be an operation of selecting the first image by the user on an interface of an application for configuring the wallpaper in the mobile phone 10 (for example, an interface that is of a setting application and that corresponds to the wallpaper), or may be an operation of selecting, in another application in which the first image is displayed (for example, an application like Gallery or Pictures), the first image as the wallpaper.

In some other embodiments, the operation of configuring the wallpaper based on the first image by the user may alternatively be an operation that is in another form and that indicates the mobile phone 10 to set at least a partial region of the first image as the wallpaper.

For example, for the case shown in FIG. 4A, the operation of configuring the wallpaper based on the first image by the user may be an operation of touching and holding the image P3 (as the first image) and then selecting a set as wallpaper control U12. After detecting the operation, the mobile phone 10 may use, as the folded-state wallpaper, a region (as the first image region) selected by the user in the image P3 by using the cropping box B1 shown in FIG. 4B, and use, as the unfolded-state wallpaper, a region (as the second image region) selected by the user in the image P3 by using the cropping box B2 shown in FIG. 4C.

In some embodiments, the first image region and the second image region partially overlap.

In some embodiments, for the first image, when the foregoing image expansion condition is met, the mobile phone 10 may expand the first image to the second image, determine the folded-state wallpaper based on the first image region of the first image (or the second image), and/or determine the unfolded-state wallpaper based on the second image region of the second image.

For example, in some embodiments, when detecting an operation of configuring the wallpaper based on the second image by the user, if detecting that the foregoing image expansion condition is met, the mobile phone 10 may perform image expansion on the second image based on the user operation, to obtain the first image. For details, refer to the foregoing embodiments in FIG. 6A to FIG. 6D. Details are not described herein again.

In some embodiments, the mobile phone 10 may perform image expansion on the second image based on a pre-trained image expansion model, to obtain the first image.

In some embodiments, the mobile phone 10 may alternatively send the second image and an image expansion region selected by the user to a server or another device, so that the server or the another device may perform image expansion on the second image by using an image expansion model or another algorithm to obtain the first image, and then send the first image to the mobile phone 10.

S702: Determine a first display element in the folded-state wallpaper or the unfolded-state wallpaper or the first image.

After configuring the first image region of the first image as the folded-state wallpaper and configuring the second image region of the first image as the unfolded-state wallpaper, the mobile phone 10 may identify display elements that are in the folded-state wallpaper, the unfolded-state wallpaper, or the first image and that can be used to generate first animation effect, and determine, as the first display element, a display element selected by the user from the partial display elements.

In some embodiments, alternatively, after identifying display elements that are in the folded-state wallpaper or the unfolded-state wallpaper and that can be used to generate first animation effect, the mobile phone 10 may use all the identified display elements as first display elements. This is not limited herein.

For example, for the cases in FIG. 4A to FIG. 4C, the mobile phone 10 may identify the vine U41, the watering can U42, the squirrel U43, and the bird U44 as the display elements that can be used to generate the first animation effect, and use at least a part of the vine U41, the watering can U42, the squirrel U43, and the bird U44 as the first display elements based on user selection.

For another example, for the case shown in FIG. 3A, the mobile phone 10 may use the moon U0 as the first display element; for the case shown in FIG. 3B, the mobile phone 10 may use the cloud U01 and the cloud U02 as the first display elements; and for the case shown in FIG. 3C, the mobile phone 10 may use the ship U03 as the first display element.

In some embodiments, the mobile phone 10 may identify, based on a pre-trained content identification model, the display element that is in the folded-state wallpaper or the unfolded-state wallpaper and that can be used to generate the first animation effect.

In some embodiments, the mobile phone 10 may alternatively send the folded-state wallpaper or the unfolded-state wallpaper or the first image to the server or another device, and the server or the another device determines the first display element in the folded-state wallpaper or the unfolded-state wallpaper.

In some embodiments, the first display element may include but is not limited to an animal, a plant, a transportation means, a planet, a weather element (a cloud, rain, lightning, hail, or snow), an instrument (or example, stationery or a cleaning tool), and the like. In some other embodiments, the first display element may be any other display element. This is not limited herein.

S703: Generate switching animation including the first animation effect corresponding to the first display element.

After determining the first display element, the mobile phone 10 may generate and store switching animation including first animation effect corresponding to each first display element.

In some embodiments, the first animation effect may be animation effect in which the first display element switches from the first display state to the second display state. If the display status of the first display element in the folded-state wallpaper is not the first display state, the mobile phone 10 may further adjust the display status of the first display element in the folded-state wallpaper to the first display state, and use an adjusted wallpaper as the folded-state wallpaper; or if the display status of the first display element in the unfolded-state wallpaper is not the second display state, the mobile phone 10 may further adjust the display status of the first display element in the unfolded-state wallpaper to the second display state, and use an adjusted wallpaper as the folded-state wallpaper. In this way, a switching process of the folded-state wallpaper and the unfolded-state wallpaper can be smooth, so that a sudden picture change can be further reduced, and user experience can be improved.

For example, corresponding to the case shown in FIG. 3A, the mobile phone 10 may change a form of the moon U0 in the unfolded-state wallpaper P2B from the crescent moon (as the first display state) to the full moon (as the second display state) to obtain the moon U0', so as to obtain the unfolded-state wallpaper P2B' and set the unfolded-state wallpaper P2B' as the wallpaper displayed on the mobile phone 10 in the unfolded state. The first animation effect may be first animation effect in which the moon U0 gradually changes to the moon U0' (namely, animation effect in which the moon gradually changes from the crescent moon to the full moon).

For another example, for the case shown in FIG. 3B, the mobile phone 10 may adjust the cloud U01 in the unfolded-state wallpaper P2B from the position A to the position A', and adjust the cloud U02 from the position B to the position B' (the cloud U01 at the position A may be referred to as being in the first display state, the cloud U01 at the position A' may be referred to as being in the second display state, the cloud U02 at the position B may be referred to as being in the first display state, and the cloud U02 at the position B' may be referred to as being in the second display state), to obtain the unfolded-state wallpaper P2B", and set the unfolded-state wallpaper P2B" as the wallpaper displayed on the mobile phone 10 in the unfolded state. The first animation effect may be animation effect in which the cloud U01 moves from the position A to the position A' and the cloud U02 moves from the position B to the position B'.

For another example, for the case shown in FIG. 3C, the mobile phone 10 may adjust the ship U03 in the unfolded-state wallpaper P2B from the position C to the position C', and scale up the ship U03 to the ship U03' (the ship U03 at the position C may be referred to as being in the first display state, and the scaled-up ship U03' at the position C' may be referred to as being in the second display state), to obtain the unfolded-state wallpaper P2B"', and set the unfolded-state wallpaper P2B‴ as the wallpaper displayed on the mobile phone 10 in the unfolded state. The first animation effect may be animation effect in which the ship U03 moves from the position C to the position C' and gradually scales up to the ship U03'.

For another example, for the cases shown in FIG. 4A to FIG. 4F, the mobile phone 10 may delete the vine U41 from the folded-state wallpaper P3A (or may replace the vine U41 with the image of the seedling of the vine U41), to obtain the folded-state wallpaper P3A', and set the folded-state wallpaper P3A' as the wallpaper displayed on the mobile phone 10 in the folded state. The first animation effect may include at least one of the following pieces of animation effect: animation effect in which the vine U41 grows from the seedling to the vine U41, animation effect in which the watering can U42 sprinkles water, animation effect in which the squirrel U43 moves from the right side of the flexible screen 11 (the positive direction of the X-axis shown in FIG. 1) to the left side (the negative direction of the X-axis shown in FIG. 1), and animation effect in which the bird U44 moves from the right side (the positive direction of the X-axis shown in FIG. 1) to the left side of the flexible screen 11 (the negative direction of the X-axis shown in FIG. 1).

In some embodiments, the display status of the display element may include at least one of the following statuses: a form, a size, a position, a rotation angle, an occlusion relationship with another display element, and whether to display.

In some embodiments, the first animation effect may include at least one of the following pieces of animation effect: animation effect in which the first display element switches from a first form to a second form, animation effect in which an occlusion relationship between the first display element and a second display element changes, or animation effect in which a size, a position, or a rotation angle of the first display element changes.

In some embodiments, a storage form of the switching animation may be a dynamic image, a video file, an animation file, a configuration parameter (for example, a correspondence between the position, the size, a scaling up/down factor, the form, the rotation angle, or the like of the first display element and time), or may be another form that can indicate the mobile phone 10 to display the first animation effect. This is not limited herein.

In some embodiments, another display element and the animation effect of each first display element may be integrated into a same dynamic image, a same video file, a same animation file, or a same group of configuration parameters.

In some embodiments, if an overlapping region between the folded-state wallpaper and the unfolded-state wallpaper is displayed at a first position of the flexible screen 11 when the flexible screen 11 is in the folded state, and is displayed at a second position of the flexible screen 11 when the flexible screen 11 is in the unfolded state, the switching animation generated by the mobile phone 10 may further include switching animation effect of the folded-state wallpaper, so that the overlapping region of the moved folded-state wallpaper is displayed at the second position of the flexible screen 11.

In some embodiments, the switching animation may further include the foregoing gradual change animation effect of the unfolded-state wallpaper, that is, animation effect in which a non-overlapping region between the unfolded-state wallpaper and the folded-state wallpaper is gradually displayed.

In some embodiments, the mobile phone 10 may generate the first animation effect of each first display element based on a pre-trained animation effect generation model, and obtain the switching animation. For example, the mobile phone 10 may run the model to generate the switching animation including the first animation effect, or the mobile phone 10 may send the first display element, the switching-state wallpaper, and the folded-state wallpaper to another device, and the another device generates the switching animation including the first animation effect.

In some embodiments, the mobile phone 10 may send the first display element, the switching-state wallpaper, and the folded-state wallpaper to another device, and the another device generates the first animation effect and then sends the first animation effect to the mobile phone 10. In addition, the mobile phone 10 generates the switching animation effect (if any) of the folded-state wallpaper and/or the gradual change animation effect of the unfolded-state wallpaper.

In some embodiments, the first animation effect, the switching animation effect in which the folded-state wallpaper moves, and the gradual change animation effect of the unfolded-state wallpaper may be separately stored, or may be combined into a same dynamic image, a same video file, a same animation file, or a same group of configuration parameters.

In some embodiments, if there are a plurality of first display elements, duration of first animation effect corresponding to the first display elements may be the same or may be different, and first animation effect corresponding to different first display elements may be played at different occasions. This is not limited herein.

S704: When a folding status of the flexible screen 11 of the mobile phone 10 is changed, display the switching animation based on a folding angle of the flexible screen 11.

When the folding status of the flexible screen 11 is changed, for example, when the flexible screen 11 is changed from the folded state to the unfolded state, or when the flexible screen 11 is changed from the unfolded state to the folded state, the mobile phone 10 may display the switching animation based on the folding angle of the flexible screen 11.

For example, it is assumed that the switching animation includes N frames of images, and a folding angle range that is required for displaying the switching animation and that corresponds to the flexible screen 11 is [A, B]. In this case, the folding angle corresponding to the flexible screen 11 is C (A≤C≤B), and the mobile phone 10 may display an N×C/(B-A)^{th} frame of image in the N frames of images.

For another example, it is assumed that duration of the switching animation is T, and the folding angle range that is required for displaying the switching animation and that corresponds to the flexible screen 11 is [A, B]. In this case, the folding angle corresponding to the flexible screen 11 is C (A≤C≤B), and the mobile phone 10 may display an image corresponding to a moment T×C/(B-A) in the switching animation.

In some embodiments, if the overlapping region between the folded-state wallpaper and the unfolded-state wallpaper is displayed at the first position of the flexible screen 11 when the flexible screen 11 is in the folded state, and is displayed at the second position of the flexible screen 11 when the flexible screen 11 is in the unfolded state, in the process in which the mobile phone 10 is switched from the folded state to the unfolded state, before displaying the first animation effect, the mobile phone 10 may further display animation effect in which the folded-state wallpaper moves, so that the overlapping region of the folded-state wallpaper is displayed at the second position of the flexible screen 11.

In some embodiments, after displaying the animation effect in which the folded-state wallpaper moves, the mobile phone 10 may further display the animation effect in which the non-overlapping region between the folded-state wallpaper and the unfolded-state wallpaper is gradually displayed.

Refer to FIG. 3D. For example, for the folded-state wallpaper P2A and the unfolded-state wallpaper P2B' shown in FIG. 3A, in the process in which the folding angle of the flexible screen 11 of the mobile phone 10 gradually increases, the mobile phone 10 may play the switching animation effect in which the folded-state wallpaper P2A moves from the position at which the folded-state wallpaper P2A is displayed when the mobile phone 10 is folded to the position in the middle of the flexible screen 11. Then, as the folding angle of the flexible screen 11 gradually increases, the mobile phone 10 may display the first animation effect in which the moon U0 gradually changes to the moon U0' (the moon gradually changes from the moon U0 to the moon U0", and then gradually changes from the moon U0" to the moon U0' (full moon)), and gradually display the region that is in the unfolded-state wallpaper P2B' and that does not overlap the folded-state wallpaper P2A (as shown in the figure, the black borders gradually decrease as the folding angle increases). Finally, after the flexible screen 11 is fully unfolded, the mobile phone 10 may display the unfolded-state wallpaper P2B'.

Refer to FIG. 3E. For another example, for the folded-state wallpaper P2A and the unfolded-state wallpaper P2B" shown in FIG. 3B, in the process in which the folding angle of the flexible screen 11 of the mobile phone 10 gradually increases, the mobile phone 10 may display the switching animation effect in which the folded-state wallpaper P2A moves from the position at which the folded-state wallpaper P2A is displayed when the mobile phone 10 is folded to the position in the middle of the flexible screen 11. Then, as the folding angle of the flexible screen 11 gradually increases, the mobile phone 10 may display the animation effect in which the cloud U01 gradually moves from the position A to the position A' and the cloud U02 gradually moves from the position B to the position B', and gradually display the region that is in the unfolded-state wallpaper P2B" and that does not overlap the folded-state wallpaper P2A (as shown in the figure, the black borders gradually decrease as the folding angle increases). Finally, after the flexible screen 11 is fully unfolded, the mobile phone 10 may display the unfolded-state wallpaper P2B"'.

Refer to FIG. 3F. For another example, for the folded-state wallpaper P2A and the unfolded-state wallpaper P2B‴ shown in FIG. 3C, in the process in which the folding angle of the flexible screen 11 of the mobile phone 10 gradually increases, the mobile phone 10 may play the switching animation effect in which the folded-state wallpaper P2A moves from the position at which the folded-state wallpaper P2A is displayed when the mobile phone 10 is folded to the position in the middle of the flexible screen 11. Then, as the folding angle of the flexible screen 11 gradually increases, the mobile phone 10 may display the animation effect in which the ship U03 gradually moves from the position C to the position C' and gradually scales up to the ship U03', and gradually display the region that is in the unfolded-state wallpaper P2B‴ and that does not overlap the folded-state wallpaper P2A (as shown in the figure, the black borders gradually decrease as the folding angle increases). Finally, after the flexible screen 11 is fully unfolded, the mobile phone 10 may display the unfolded-state wallpaper P2B"'.

For another example, for the foregoing folded-state wallpaper P3A and unfolded-state wallpaper P3B, because the overlapping region between the folded-state wallpaper P3A and the unfolded-state wallpaper P3B is displayed at a same position on the flexible screen 11 when the flexible screen 11 is in the folded state and the unfolded state, in the process in which the mobile phone 10 is switched from the folded state to the unfolded state, a picture displayed on the mobile phone 10 may be animation effect in which the vine U41 continuously grows (the size continuously increases), the watering can U42 continuously sprinkles water, and the squirrel U43 and the bird U44 gradually move from the positive direction of the X-axis to the negative direction of the X-axis of the flexible screen 11.

Based on the foregoing method, in the changing process of the folding status of the flexible screen 11, the mobile phone 10 may display the first animation effect corresponding to the first display element, to avoid a sudden change during switching between the folded-state wallpaper and the unfolded-state wallpaper, thereby improving user experience.

The following describes a software architecture of the mobile phone 10 for identifying a first display element, generating first animation effect, and performing image expansion on a first image.

For example, FIG. 8 is a diagram of the software architecture of the mobile phone 10 for identifying the first display element and generating the first animation effect according to some embodiments of this application.

As shown in FIG. 8, the mobile phone 10 may include an image content understanding module 11, and a server 20 may include an animation effect generation module 21.

The image content understanding module 11 may include at least one pre-trained content understanding model, used to identify a display element in an input image. Then, the image content understanding module 11 may display, on a user interface of the mobile phone 10, the display element obtained by using the content understanding model, and determine a display element selected by a user as the first display element. Then, the mobile phone 10 may send a folded-state wallpaper and/or an unfolded-state wallpaper and the first display element (which may be the first display element, or may be an identifier of the first display element, or may be a text description of the first display element) to the animation effect generation module 21 in the server 20.

In some embodiments, the content understanding model may be a segment anything model (segment anything model, SAM), or may be another image segmentation/recognition model or network, for example, U-Net (an image recognition model), a mask region-based convolutional neural network (Mask region-based convolutional neural network, Mask R-CNN), a fully convolutional network (fully convolutional network, FCN), SegNet (a convolutional neural network-based image segmentation model), DeepLab v3+ (an atrous spatial pyramid pooling (atrous spatial pyramid pooling, ASPP) and dilated convolution (dilated convolution)-based image segmentation model), a pyramid scene parsing network (pyramid scene parsing network, PSPNet), and ENet (an image segmentation network).

The animation effect generation module 21 is configured to generate, based on the folded-state wallpaper and/or the unfolded-state wallpaper and the first display element that are sent by the mobile phone 10, first animation effect corresponding to the first display element, and send the first animation effect to the mobile phone 10. In some embodiments, first animation effect that is of each first display element and that is generated by the animation effect generation module 21 may be independent first animation effect, or may be animation effect obtained by combining first animation effect corresponding to a plurality of first display elements, or may be animation effect obtained by combining first animation effect corresponding to the folded-state wallpaper, the unfolded-state wallpaper, and each first display element.

The animation effect generation module 21 may alternatively be configured to: generate, based on the folded-state wallpaper and/or the unfolded-state wallpaper and the first display element that are sent by the mobile phone 10, the foregoing switching animation including the first animation effect of the first display element, and send the switching animation to the mobile phone 10.

In some embodiments, an existence form of the first animation effect may be a dynamic image, an animation file, a video file, a configuration parameter, or the like.

In some embodiments, the animation effect generation module 21 may include an animation effect generation model used to generate animation effect, for example, a foundation model (for example, a Pangu large model or another foundation model). The animation effect generation module 21 may encode the first display element, the text description of the first display element, and the like by using the foundation model, and generate the first animation effect corresponding to each first display element.

In some embodiments, the animation effect generation module 21 may alternatively be deployed in the mobile phone 10. This is not limited herein.

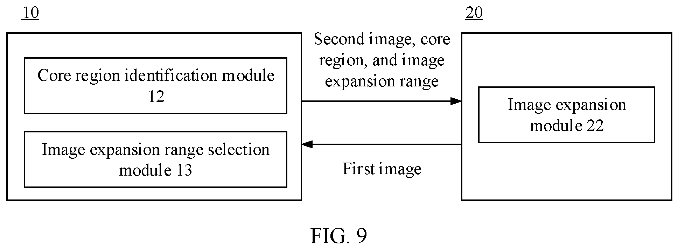

For example, FIG. 9 is a diagram of a software architecture of the mobile phone 10 for implementing an image expansion function according to some embodiments of this application.

As shown in FIG. 9, the mobile phone 10 may include a core region identification module 12 and an image expansion range selection module 13, and a server 20 may include an image expansion module 22.

The core region identification module 12 is configured to identify a core region of an input first image, for example, including a region in which a subject like a portrait or an animal is located. The image expansion range selection module 13 is configured to obtain an image expansion range that is selected by a user for performing image expansion on the first image. After determining the core region of the first image and the image expansion range selected by the user, the mobile phone 10 may send the first image, the core region, and the image expansion range to the image expansion module 22.

After receiving the first image, the core region, and the image expansion range, the image expansion module 22 may generate content in the image expansion range based on content in the core region of the first image and the first image, to obtain a second image, and send the second image to the mobile phone 10.

In some implementations, the image expansion module 22 may include a pre-trained image expansion model. The model may understand content of an input image, generate a prompt word, and then generate image content in an input image expansion range.

In some embodiments, the image expansion module 22 may alternatively be deployed in the mobile phone 10. This is not limited herein.

It should be understood that the software architecture of the mobile phone 10 shown in FIG. 9 for implementing the image expansion function is merely an example. In some other embodiments, the software architecture may include more or fewer modules, or may combine or split some modules, or may adjust a deployment position of each module. This is not limited herein.

An embodiment of this application provides a program product. When the program product is executed on an electronic device, the electronic device may be enabled to implement the wallpaper display method provided in the foregoing embodiments.

An embodiment of this application further provides a readable storage medium. The readable storage medium stores one or more programs/instructions. When the one or more programs/instructions are executed by an electronic device, the electronic device is enabled to implement the wallpaper display method provided in the foregoing embodiments.

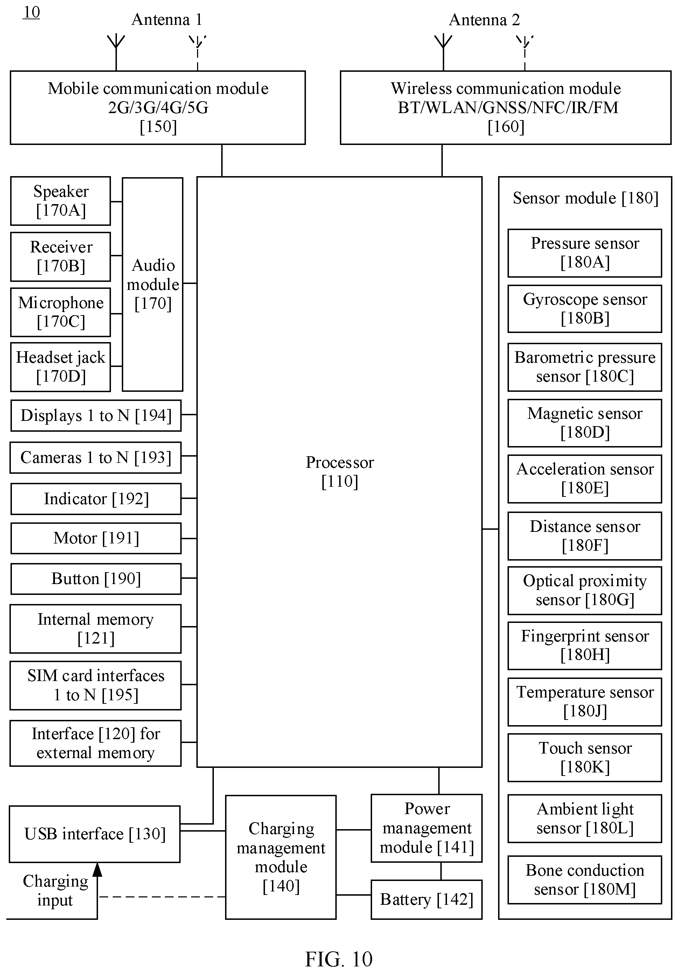

Further, FIG. 10 is a diagram of a structure of the mobile phone 10 according to some embodiments of this application.

As shown in FIG. 10, the mobile phone 10 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include a central processing unit (central processing unit, CPU), an AP, a modem processor, a graphics processing unit (graphics processing unit, GPU), an image signal processor (image signal processor, ISP), a microcontroller unit (microcontroller unit, MCU), a video codec, a digital signal processor (digital signal processor, DSP), a baseband processor, a neural network processor (neural-network processing unit, NPU), a field programmable gate array (field programmable gate array, FPGA), and the like. In some embodiments, different processing units may be independent components, or may be integrated into one or more processors.

A memory may be further disposed in the processor 110, and is configured to store one or more programs and data. In some embodiments, the memory in the processor 110 is a cache. The memory may store one or more programs or data that has been used or is cyclically used by the processor 110. When the processor 110 needs to use the one or more programs or the data again, the processor may directly invoke the one or more programs or the data from the memory. This avoids repeated access, reduces waiting time of the processor 110, and improves system efficiency.

In some embodiments, the processor 110 may be configured to execute one or more programs/instructions corresponding to the wallpaper display method provided in the foregoing embodiments.

The charging management module 140 is configured to receive a charging input from a charger. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the mobile phone 10 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 may provide a wireless communication solution that is applied to the mobile phone 10 and that includes 2G, 3G, 4G, 5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least a part of functional modules of the mobile communication module 150 may be disposed in the processor 110. In some embodiments, at least a part of functional modules of the mobile communication module 150 may be disposed in a same device as at least a part of modules of the processor 110.

The wireless communication module 160 may provide a wireless communication solution that is applied to the mobile phone 10 and that includes a wireless local area network (wireless local area network, WLAN) (for example, a wireless fidelity network), Bluetooth (Bluetooth, BT), a global navigation satellite system (global navigation satellite system, GNSS), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The mobile phone 10 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image.

The camera 193 is configured to capture a static image or a video.

The interface 120 for external memory may be configured to connect to an external storage card. The external storage card communicates with the processor 110 through the interface 120 for external memory, to implement a data storage function. For example, application data of an application is stored in the external storage card.

The internal memory 121 may be configured to store one or more programs and corresponding data. The internal memory 121 may include a program storage region and a data storage region. In some embodiments, the program storage region may store an operating system, an application required by at least one function, and the like, for example, a program/instructions corresponding to the wallpaper display method provided in the foregoing embodiments. The data storage region may store data created during use of the mobile phone 10, for example, application data of an application. In addition, the internal memory 121 may include a high-speed random access memory, or may include a nonvolatile memory, for example, at least one magnetic disk storage device, a flash memory, or a universal flash storage. The processor 110 executes various function applications of the mobile phone 10 by running one or more programs stored in the internal memory 121 and/or one or more programs stored in the memory disposed in the processor 110.

The mobile phone 10 may implement an audio function, for example, music playing, by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The mobile phone 10 determines pressure intensity based on a change of the capacitance. When a touch operation is performed on the display 194, the mobile phone 10 detects intensity of the touch operation by using the pressure sensor 180A. The mobile phone 10 may also calculate a touch position based on a detection signal of the pressure sensor 180A.

The barometric pressure sensor 180C may be configured to detect barometric pressure at a position of the mobile phone 10.

The acceleration sensor 180E may detect magnitude of accelerations of the mobile phone 10 in various directions (usually on three axes). When the mobile phone 10 is still, a value and a direction of gravity may be detected. The acceleration sensor 180E may be further configured to identify a posture of the electronic device, and is used in an application such as switching between a landscape mode and a portrait mode or a pedometer.

The ambient light sensor 180L is configured to sense ambient light brightness. The mobile phone 10 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G, to detect whether the mobile phone 10 is in a pocket, to avoid accidental touch.

The fingerprint sensor 180H is configured to collect a fingerprint. The mobile phone 10 may use a feature of the captured fingerprint to implement fingerprint-based unlocking, application lock access, fingerprint-based photographing, fingerprint-based call answering, and the like.

The touch sensor 180K is also referred to as a "touch component". The touch sensor 180K may be disposed on the display 194, and the touch sensor 180K and the display 194 form a touch screen, which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may be alternatively disposed on a surface of the mobile phone 10 at a position different from that of the display 194.

The button 190 includes a power button, a volume button, and the like. The button 190 may be a mechanical button, or may be a touch button. The mobile phone 10 may receive a button input, and generate a button signal input related to user setting and function control of the mobile phone 10.

The motor 191 may generate a vibration prompt. The indicator 192 may be an indicator light, and may be configured to indicate a charging status and a power change, or may be configured to indicate a message, a notification, and the like.

The SIM card interface 195 is configured to connect to a SIM card or an eSIM.

It may be understood that the structure of the mobile phone 10 shown in this embodiment of this application does not constitute a specific limitation on an electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

In the accompanying drawings, some structural or method features may be shown in a specific arrangement and/or sequence. However, it should be understood that such a specific arrangement and/or sequence may not be required. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that in the examples and specification of this patent, relational terms such as first and second are merely used to distinguish one entity or operation from another, and do not necessarily require or imply any such actual relationship or order between these entities or operations. Furthermore, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude another same element existing in the process, method, article, or device that includes the element.

## Claims

1. A wallpaper display method, applied to a foldable electronic device, wherein the method comprises:
in a folded state, displaying, by the foldable electronic device, a first wallpaper;
displaying first animation in a process in which the foldable electronic device is unfolded from the folded state to an unfolded state, wherein the first animation comprises first animation effect corresponding to a first display element, and the first animation effect is generated based on the first display element in the first wallpaper and/or a second wallpaper during configuration of the first wallpaper and the second wallpaper; and
a display progress of the first animation is associated with a folding angle during unfolding of the foldable electronic device; and
displaying the second wallpaper when the foldable electronic device is unfolded to the unfolded state.

2. The method according to claim 1, wherein the first wallpaper and the second wallpaper are obtained based on a first image.

3. The method according to claim 2, wherein the first wallpaper is obtained based on a first image region of the first image, and the second wallpaper is obtained based on a second image region of the first image.

4. The method according to claim 2, wherein the first wallpaper is obtained based on a first image region of a second image, the second wallpaper is obtained based on a second image region of the second image, and the second image is obtained by performing image expansion on the first image.

5. The method according to claim 2, wherein the first wallpaper is obtained based on a first image region of the first image, the second wallpaper is obtained based on a second image region of a second image, and the second image is obtained by performing image expansion on the first image.

6. The method according to claim 4 or 5, wherein the second image is obtained by performing image expansion on the first image based on a subject in the first image.

7. The method according to claim 6, wherein a process of performing image expansion on the first image comprises:
performing image expansion on the second image based on the subject in the first image, to obtain a plurality of expanded images; and
using, as the second image, an expanded image selected by a user from the plurality of expanded images.

8. The method according to any one of claims 3 to 7, wherein the first animation effect comprises a plurality of frames of images in which the first display element switches from a first display state to a second display state.

9. The method according to claim 8, wherein the display status comprises at least one of the following statuses: a form, a size, a position, a rotation angle, an occlusion relationship with another display element, and whether to display.

10. The method according to claim 8 or 9, wherein a process of generating the first animation effect comprises:
adjusting display statuses/a display status of the first display element in the first image region and/or the second image region, for the first display element to be in the first display state in the first wallpaper and to be in the second display state in the second wallpaper; and
generating the first animation effect in which the first display element switches from the first display state to the second display state, wherein
the first wallpaper is a corresponding image obtained by adjusting the display status of the first display element in the first image region, and/or the second wallpaper is a corresponding image obtained by adjusting the display status of the first display element in the second image region.

11. The method according to claim 8 or 9, wherein the first display element is in the first display state in the first image region and is in the second display state in the second image region; and a process of generating the first animation effect comprises:
generating the first animation effect in which the first display element switches from the first display state to the second display state, wherein
the first wallpaper is an image corresponding to the first image region, and the second wallpaper is an image corresponding to the second image region.

12. The method according to any one of claims 1 to 11, wherein the first wallpaper and the second wallpaper have third image regions having same content.

13. The method according to claim 12, wherein the first animation further comprises second animation effect in which the first wallpaper moves, and after the first wallpaper moves, a position of the third image region of the first wallpaper is the same as a position that is of the third image region and that is obtained when the foldable electronic device displays the second wallpaper.

14. The method according to claim 12 or 13, wherein the first animation further comprises third animation effect in which image content in a region other than the third image region of the second wallpaper is displayed by extending outward from the third image region.

15. An electronic device, comprising:
a memory, configured to store one or more programs; and
a processor, configured to execute the one or more programs, to enable the electronic device to implement the wallpaper display method according to any one of claims 1 to 14.

16. A readable storage medium, wherein the readable storage medium comprises one or more programs, and when the one or more programs are executed on an electronic device, the electronic device is enabled to implement the wallpaper display method according to any one of claims 1 to 14.

17. A program product, wherein when the program product runs on an electronic device, the electronic device is enabled to implement the wallpaper display method according to any one of claims 1 to 14.
